(19) **Europäisches Patentamt**
**European Patent Office**
**Office européen des brevets**

(11) **EP 4 672 788 A1**

(12) **EUROPEAN PATENT APPLICATION**
published in accordance with Art. 153(4) EPC

(43) Date of publication:
**31.12.2025 Bulletin 2026/01**

(21) Application number: **24774018.6**

(22) Date of filing: **15.03.2024**

(51) International Patent Classification (IPC):
**H04W 4/029** (2018.01)

(52) Cooperative Patent Classification (CPC):
**H04B 17/309; H04W 4/02; H04W 4/029**

(86) International application number:
**PCT/CN2024/081855**

(87) International publication number:
**WO 2024/193453 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 CN 202310302334**

(71) Applicant: **Huawei Technologies Co., Ltd.
Shenzhen, Guangdong 518129 (CN)**

(72) Inventors:
- **TIAN, Yang
  Shenzhen, Guangdong 518129 (CN)**
- **SUN, Yan
  Shenzhen, Guangdong 518129 (CN)**
- **PANG, Jiyong
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **POSITIONING METHOD, COMMUNICATION APPARATUS, AND STORAGE MEDIUM**

(57) This application discloses a positioning method, a communication apparatus, and a storage medium. In this application, a plurality of terminals send respective capability information to an LMF or an access network device, and the LMF or the access network device sends a plurality of pieces of second information to the plurality of terminals. The second information indicates that a first positioning result of a first terminal is used to determine a positioning result of at least one second terminal, and the plurality of terminals include the first terminal and the at least one second terminal. According to the technical solutions of this application, a network side does not need to perform positioning measurement on each terminal. Positioning measurement is performed on the first terminal, and a positioning result of the first terminal may be used to determine a positioning result of another terminal, thereby reducing signaling overheads.

FIG. 16A

**Description**

This application claims priority to Chinese Patent Application No. 202310302334.3, filed with the China National Intellectual Property Administration on March 17, 2023 and entitled "POSITIONING METHOD, COMMUNICATION APPARATUS, AND STORAGE MEDIUM", which is incorporated herein by reference in its entirety.

**TECHNICAL FIELD**

This application relates to the field of communication technologies, and in particular, to a positioning method, a communication apparatus, and a storage medium.

**BACKGROUND**

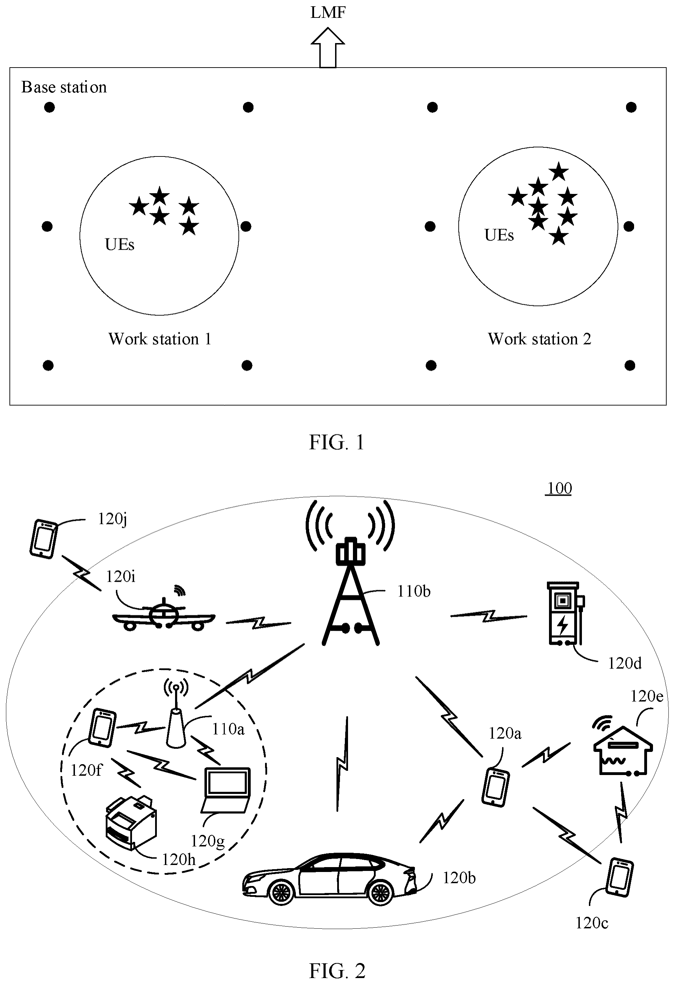

Currently, location information of people and objects becomes increasingly important. Positioning devices and technologies are used in fields such as navigation and aviation, mapping for disaster relief, military and national defense, vehicle navigation, logistics tracking, and traffic management. FIG. 1 is an example diagram of a scenario in which a plurality of closely located user equipments (user equipment, UE) are positioned. A plurality of UEs in a work station (work station) 1 and a work station 2 (for example, a shopping mall, a railway station, a factory, and vehicle-to-everything (vehicle-to-everything, V2X)) are closely located. Conventionally, to position the plurality of UEs, a network side independently positions each UE. This causes large signaling overheads.

**SUMMARY**

This application provides a positioning method, a communication apparatus, and a storage medium, to reduce positioning signaling overheads in a scenario in which a plurality of UEs need to be positioned.

According to a first aspect, a positioning method is provided. The method is performed by a first terminal, or a chip or a circuit used in the first terminal. The method includes: sending first information, where the first information indicates capability information of the first terminal; and receiving second information, where the second information indicates that a first positioning result of the first terminal is used to determine a positioning result of at least one second terminal.

In this aspect, the first terminal sends its own capability information, so that a network side does not need to perform positioning measurement on each terminal. Positioning measurement is performed on the first terminal, and a positioning result of the first terminal may be used to determine a positioning result of another terminal, thereby reducing signaling overheads.

In a possible implementation, the second information is based on the capability information of the first terminal and capability information of the at least one second terminal.

In other words, the second information is related to the capability information of the first terminal and the capability information of the at least one second terminal.

In this implementation, the network side determines, based on capabilities of the first terminal and the at least one second terminal, or whether the capability matches the network side, that the first positioning result of the first terminal is used to determine the positioning result of the at least one second terminal.

In another possible implementation, the second information includes an identifier of the first terminal and/or an identifier of the at least one second terminal.

In still another possible implementation, the capability information includes at least one of the following information: computing capability information, storage capability information, model training capability information, model update capability information, and capability information of supporting a model with a specific function.

In still another possible implementation, the method further includes: receiving the first positioning result.

In still another possible implementation, before receiving the first positioning result, the method further includes: receiving a first reference signal; and sending a first channel measurement result. The first channel measurement result is obtained by measuring the first reference signal, and the first positioning result is obtained based on the first channel measurement result.

In this implementation, the first terminal may be positioned through downlink positioning.

In still another possible implementation, before receiving the first positioning result, the method further includes: receiving positioning configuration information; and sending a second reference signal based on the positioning configuration information. The first positioning result is obtained based on a second channel measurement result of the second reference signal.

In this implementation, the first terminal may be positioned through uplink positioning.

In still another possible implementation, the method further includes: sending at least one piece of third information to the at least one second terminal, where the at least one piece of third information indicates the at least one second terminal to send at least one first sidelink reference signal to the first terminal; receiving the at least one first sidelink reference signal from the at least one second terminal; and measuring the at least one first sidelink reference signal to obtain at least one third channel measurement result.

In this implementation, after positioning the first terminal, the first terminal may indicate the at least one second terminal to send a sidelink reference signal to the first terminal, to measure a channel between the first terminal and the at least one second terminal.

In still another possible implementation, the method further includes: positioning the at least one second terminal based on the first positioning result and the at least one third channel measurement result, to obtain at least one second positioning result; and respectively sending the at least one second positioning result to the at least one second terminal.

In this implementation, the first terminal may position the at least one second terminal based on the channel measurement result between the first terminal and the at least one second terminal and the previously obtained first positioning result.

In still another possible implementation, the method further includes: sending the at least one third channel measurement result to a location management function (location management function, LMF) network element, where the third channel measurement result is used to position the at least one second terminal based on the first positioning result.

In this implementation, the at least one second terminal may be positioned by the LMF.

In still another possible implementation, the method further includes: sending at least one second sidelink reference signal to the at least one second terminal.

In this implementation, the first terminal may send the at least one second sidelink reference signal to the at least one second terminal, and the at least one second terminal measures the channel between the at least one second terminal and the first terminal.

According to a second aspect, a positioning method is provided. The method is performed by a second terminal, or a chip or a circuit used in the second terminal. The method includes: sending fourth information, where the fourth information indicates capability information of the second terminal; and receiving second information, where the second information indicates that a positioning result of the second terminal is to be determined based on a positioning result of another terminal, or that a first positioning result of a first terminal is used to determine a positioning result of at least one second terminal.

In a possible implementation, the second information is based on capability information of the first terminal and the capability information of the at least one second terminal.

In other words, the second information is related to the capability information of the first terminal and the capability information of the at least one second terminal.

In another possible implementation, the second information includes an identifier of the first terminal and/or an identifier of the at least one second terminal.

In still another possible implementation, the capability information includes at least one of the following information: computing capability information, storage capability information, model training capability information, model update capability information, and capability information of supporting a model with a specific function.

In still another possible implementation, the method further includes: receiving third information from the first terminal, where the third information indicates the second terminal to send a first sidelink reference signal to the first terminal; sending the first sidelink reference signal to the first terminal based on the third information; and receiving a second positioning result corresponding to the second terminal from the first terminal or an LMF.

In still another possible implementation, the method further includes: receiving a second sidelink reference signal from the first terminal; measuring the second sidelink reference signal to obtain a fourth channel measurement result; sending the fourth channel measurement result to the LMF, where the fourth channel measurement result is used to position the second terminal based on the first positioning result; and receiving a second positioning result from the LMF.

According to a third aspect, a positioning method is provided. The method is performed by an LMF, or a chip or a circuit used in the LMF. The method includes: respectively receiving a plurality of pieces of first information from a plurality of terminals, where the plurality of pieces of first information respectively indicate capability information of the plurality of terminals; and respectively sending a plurality of pieces of second information to the plurality of terminals, where the second information indicates that a first positioning result of a first terminal is used to determine a positioning result of at least one second terminal, and the plurality of terminals include the first terminal and the at least one second terminal.

In this aspect, a network side does not need to perform positioning measurement on each terminal. Positioning measurement is performed on the first terminal, and a positioning result of the first terminal may be used to determine a positioning result of another terminal, thereby reducing signaling overheads.

In a possible implementation, the second information is based on the capability information of the plurality of terminals.

In other words, the second information is related to the capability information of the plurality of terminals.

In another possible implementation, the second information includes an identifier of the first terminal and/or an identifier of the at least one second terminal.

In still another possible implementation, the capability information includes at least one of the following information: computing capability information, storage capability information, model training capability information, model update capability information, and capability information of supporting a model with a specific function.

In still another possible implementation, the method further includes: receiving a first channel measurement result and/or a first channel characteristic corresponding to the first terminal; and sending the first positioning result of the first terminal, where the first positioning result is based on the first channel measurement result and/or the first channel characteristic.

In this implementation, for an access network device having a model inference capability, the LMF may receive a first channel characteristic from the access network device, and the LMF performs positioning based on the first channel characteristic. This can improve positioning efficiency of the LMF, and reduce signaling overheads.

In still another possible implementation, the channel characteristic includes at least one of the following: a line-of-sight path identification result, a non-line-of-sight path identification result, a first-path time-of-arrival estimation result, and an angle-of-arrival estimation result.

In still another possible implementation, the method further includes: receiving at least one third channel measurement result, where the at least one third channel measurement result is based on at least one sidelink reference signal between the first terminal and the at least one second terminal; positioning the at least one second terminal based on the first positioning result and the at least one third channel measurement result, to obtain at least one second positioning result; and sending the at least one second positioning result to the at least one second terminal.

According to a fourth aspect, a positioning method is provided. The method is performed by an access network device, or a chip or a circuit used in the access network device. The method includes: respectively receiving a plurality of pieces of first information from a plurality of terminals, where the plurality of pieces of first information respectively indicate capability information of the plurality of terminals; and respectively sending a plurality of pieces of second information to the plurality of terminals, where the second information indicates that a first positioning result of a first terminal is used to determine a positioning result of at least one second terminal, and the plurality of terminals include the first terminal and the at least one second terminal.

In this aspect, a network side does not need to perform positioning measurement on each terminal. Positioning measurement is performed on the first terminal, and a positioning result of the first terminal may be used to determine a positioning result of another terminal, thereby reducing signaling overheads.

In a possible implementation, the second information is based on the capability information of the plurality of terminals.

In other words, the second information is related to the capability information of the plurality of terminals.

In another possible implementation, the second information includes an identifier of the first terminal and/or an identifier of the at least one second terminal.

In still another possible implementation, the capability information includes at least one of the following information: computing capability information, storage capability information, model training capability information, model update capability information, and capability information of supporting a model with a specific function.

In still another possible implementation, the method further includes: receiving a first reference signal from the first terminal; and sending a channel characteristic to an LMF network element. The channel characteristic is based on a channel measurement result of the first reference signal.

In still another possible implementation, before the receiving the first reference signal from the first terminal, the method further includes: sending positioning configuration information to the first terminal. The positioning configuration information indicates a sending periodicity and a time-frequency resource that correspond to the first reference signal.

In still another possible implementation, the channel characteristic includes at least one of the following: a line-of-sight path identification result, a non-line-of-sight path identification result, a first-path time-of-arrival estimation result, and an angle-of-arrival estimation result.

According to a fifth aspect, a communication apparatus is provided. The communication apparatus may implement the method in the first aspect. For example, the communication apparatus may be a first terminal, or a chip or a circuit in the first terminal. The foregoing method may be implemented by software, hardware, or hardware executing corresponding software.

In a possible implementation, the apparatus includes a communication unit and a processing unit. The communication unit is configured to send first information, where the first information indicates capability information of the first terminal. The communication unit is further configured to receive second information, where the second information indicates that a first positioning result of the first terminal is used to determine a positioning result of at least one second terminal.

Optionally, the second information is based on the capability information of the first terminal and capability information of the at least one second terminal.

In other words, the second information is related to the capability information of the first terminal and the capability information of the at least one second terminal.

Optionally, the second information includes an identifier of the first terminal and/or an identifier of the at least one second terminal.

Optionally, the capability information includes at least one of the following information: computing capability information, storage capability information, model training capability information, model update capability information, and capability information of supporting a model with a specific function.

Optionally, the communication unit is further configured to receive the first positioning result.

Optionally, the communication unit is further configured to receive a first reference signal. The communication unit is further configured to send a first channel measurement result. The first channel measurement result is obtained by measuring the first reference signal, and the first positioning result is obtained based on the first channel measurement result.

Optionally, the communication unit is further configured to receive positioning configuration information. The communication unit is further configured to send a second reference signal based on the positioning configuration information. The first positioning result is obtained based on a second channel measurement result of the second reference signal.

Optionally, the communication unit is further configured to send at least one piece of third information to the at least one second terminal, where the at least one piece of third information indicates the at least one second terminal to send at least one first sidelink reference signal to the first terminal. The communication unit is further configured to receive the at least one first sidelink reference signal from the at least one second terminal. The processing unit is further configured to measure the at least one first sidelink reference signal to obtain at least one third channel measurement result.

Optionally, the processing unit is further configured to position the at least one second terminal based on the first positioning result and the at least one third channel measurement result, to obtain at least one second positioning result. The communication unit is further configured to respectively send the at least one second positioning result to the at least one second terminal.

Optionally, the communication unit is further configured to send the at least one third channel measurement result to an LMF. The third channel measurement result is used to position the at least one second terminal based on the first positioning result.

Optionally, the communication unit is further configured to send at least one second sidelink reference signal to the at least one second terminal.

According to a sixth aspect, a communication apparatus is provided. The communication apparatus may implement the method in the second aspect. For example, the communication apparatus may be a second terminal, or a chip or a circuit in the second terminal. The foregoing method may be implemented by software, hardware, or hardware executing corresponding software.

In a possible implementation, the apparatus includes a communication unit and a processing unit. The communication unit is configured to send fourth information, where the fourth information indicates capability information of the second terminal. The communication unit is further configured to receive second information, where the second information indicates that a positioning result of the second terminal is to be determined based on a positioning result of another terminal, or that a first positioning result of a first terminal is used to determine a positioning result of at least one second terminal.

Optionally, the second information is based on capability information of the first terminal and the capability information of the at least one second terminal.

In other words, the second information is related to the capability information of the first terminal and the capability information of the at least one second terminal.

Optionally, the second information includes an identifier of the first terminal and/or an identifier of the at least one second terminal.

Optionally, the capability information includes at least one of the following information: computing capability information, storage capability information, model training capability information, model update capability information, and capability information of supporting a model with a specific function.

Optionally, the communication unit is further configured to receive third information from the first terminal, where the third information indicates the second terminal to send a first sidelink reference signal to the first terminal. The communication unit is further configured to send the first sidelink reference signal to the first terminal based on the third information. The communication unit is further configured to receive a second positioning result corresponding to the second terminal from the first terminal or an LMF.

Optionally, the communication unit is further configured to receive a second sidelink reference signal from the first terminal. The processing unit is configured to measure the second sidelink reference signal to obtain a fourth channel measurement result. The communication unit is further configured to send the fourth channel measurement result to the LMF, where the fourth channel measurement result is used to position the second terminal based on the first positioning result. The communication unit is further configured to receive a second positioning result from the LMF.

According to a seventh aspect, a communication apparatus is provided. The communication apparatus may implement the method in the third aspect. For example, the communication apparatus may be an LMF, or a chip or a circuit in the LMF. The foregoing method may be implemented by software, hardware, or hardware executing corresponding software.

In a possible implementation, the apparatus includes a communication unit and a processing unit. The communication unit is configured to respectively receive a plurality of pieces of first information from a plurality of terminals, where the plurality of pieces of first information respectively indicate capability information of the plurality of terminals. The communication unit is further configured to respectively send a plurality of pieces of second information to the plurality of terminals, where the second information indicates that a first positioning result of a first terminal is used to determine a positioning result of at least one second terminal, and the plurality of terminals include the first terminal and the at least one second terminal.

Optionally, the second information is based on the capability information of the plurality of terminals.

In other words, the second information is related to the capability information of the plurality of terminals.

Optionally, the second information includes an identifier of the first terminal and/or an identifier of the at least one second terminal.

Optionally, the capability information includes at least one of the following information: computing capability information, storage capability information, model training capability information, model update capability information, and capability information of supporting a model with a specific function.

Optionally, the communication unit is further configured to receive a first channel measurement result and/or a first channel characteristic corresponding to the first terminal. The communication unit is further configured to send the first positioning result of the first terminal, where the first positioning result is based on the first channel measurement result and/or the first channel characteristic.

Optionally, the channel characteristic includes at least one of the following: a line-of-sight path identification result, a non-line-of-sight path identification result, a first-path time-of-arrival estimation result, and an angle-of-arrival estimation result.

Optionally, the communication unit is further configured to receive at least one third channel measurement result, where the at least one third channel measurement result is based on at least one sidelink reference signal between the first terminal and the at least one second terminal. The processing unit is configured to position the at least one second terminal based on the first positioning result and the at least one third channel measurement result, to obtain at least one second positioning result. The communication unit is further configured to send the at least one second positioning result to the at least one second terminal.

According to an eighth aspect, a communication apparatus is provided. The communication apparatus may implement the method in the fourth aspect. For example, the communication apparatus may be an access network device, or a chip or a circuit in the access network device. The foregoing method may be implemented by software, hardware, or hardware executing corresponding software.

In a possible implementation, the apparatus includes a communication unit and a processing unit. The communication unit is configured to respectively receive a plurality of pieces of first information from a plurality of terminals, where the plurality of pieces of first information respectively indicate capability information of the plurality of terminals. The communication unit is further configured to respectively send a plurality of pieces of second information to the plurality of terminals, where the second information indicates that a first positioning result of a first terminal is used to determine a positioning result of at least one second terminal, and the plurality of terminals include the first terminal and the at least one second terminal.

Optionally, the second information is based on the capability information of the plurality of terminals.

In other words, the second information is related to the capability information of the plurality of terminals.

Optionally, the second information includes an identifier of the first terminal and/or an identifier of the at least one second terminal.

Optionally, the capability information includes at least one of the following information: computing capability information, storage capability information, model training capability information, model update capability information, and capability information of supporting a model with a specific function.

Optionally, the communication unit is further configured to: receive a first reference signal from the first terminal; and send a channel characteristic to an LMF network element. The channel characteristic is based on a channel measurement result of the first reference signal.

Optionally, the communication unit is further configured to send positioning configuration information to the first terminal. The positioning configuration information indicates a sending periodicity and a time-frequency resource that correspond to the first reference signal.

Optionally, the channel characteristic includes at least one of the following: a line-of-sight path identification result, a non-line-of-sight path identification result, a first-path time-of-arrival estimation result, and an angle-of-arrival estimation result.

With reference to any one of the fifth aspect to the eighth aspect, in another possible implementation, the communication apparatus includes a processor coupled to a memory. The processor is configured to support the apparatus in performing a corresponding function in the foregoing communication method. The memory is configured to be coupled to the processor, and the memory stores a computer program (or computer executable instructions) and/or data necessary for the apparatus. Optionally, the communication apparatus may further include a communication interface, configured to support communication between the apparatus and another network element, for example, transmitting or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

With reference to any one of the fifth aspect to the eighth aspect, in still another possible implementation, the communication apparatus includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to perform the foregoing method by using a logic circuit or executing code instructions. The transceiver apparatus may be a transceiver, a transceiver circuit, an interface circuit, or an input/output interface, and is configured to: receive a signal from a communication apparatus other than the communication apparatus and transmit the signal to the processor, or transmit a signal from the processor to a communication apparatus other than the communication apparatus. When the communication apparatus is a chip, the transceiver apparatus is a transceiver circuit or an input/output interface.

When the communication apparatus is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to a ninth aspect, a communication system is provided. The communication system includes the communication apparatus according to the fifth aspect to the communication apparatus according to the eighth aspect.

According to a tenth aspect, a computer program is provided. When the computer program is run on a computer, the computer is caused to perform the method according to any one of the first aspect to the fourth aspect.

According to an eleventh aspect, a computer program product is provided, including instructions. When the instructions are run on a computer, the computer is caused to perform the method according to any one of the first aspect to the fourth aspect.

According to a twelfth aspect, a computer-readable storage medium is provided. The computer-readable storage medium stores a computer program or instructions. When the computer program or the instructions are run on a computer, the computer is caused to perform the method according to any one of the first aspect to the fourth aspect.

According to a thirteenth aspect, this disclosure provides a chip. The chip is configured to read a computer program stored in a memory, to perform the method according to any one of the first aspect to the fourth aspect, or the chip includes a circuit configured to perform the method according to any one of the first aspect to the fourth aspect.

According to a fourteenth aspect, this disclosure provides a chip system. The chip system includes a processor, configured to support an apparatus in implementing the method according to any one of the first aspect to the fourth aspect. In a possible design, the chip system further includes a memory, and the memory is configured to store a program and data that are necessary for the apparatus. The chip system may include a chip, or may include the chip and another discrete component.

For effects of the solutions provided in any one of the second aspect to the fourteenth aspect, refer to corresponding descriptions in the first aspect.

**BRIEF DESCRIPTION OF DRAWINGS**

FIG. 1 is an example diagram of a scenario in which a plurality of closely located user equipments are positioned;
FIG. 2 is a simplified diagram of a wireless communication system according to an embodiment of this application;
FIG. 3A is a diagram of a neuron structure;
FIG. 3B is a diagram of a neural network;
FIG. 3C is a diagram of an AI application framework;
FIG. 4 is a diagram of a structure of a communication system including an AI network element;
FIG. 5A is a diagram of a network architecture;
FIG. 5B is a diagram of another network architecture;
FIG. 5C is a diagram of still another network architecture;
FIG. 5D is a diagram of yet another network architecture;

FIG. 6 is a diagram of a positioning method based on a time difference of arrival;

FIG. 7 is a diagram of powers of a time-domain channel response, at different time-domain sampling points, obtained through reference signal measurement;

FIG. 8 is a diagram of an LOS path and an NLOS path;

FIG. 9A is a schematic flowchart of obtaining positioning assistance information;

FIG. 9B is another schematic flowchart of obtaining positioning assistance information;

FIG. 10A is a schematic flowchart of obtaining location information;

FIG. 10B is another schematic flowchart of obtaining location information;

FIG. 11 is a schematic flowchart of obtaining TRP configuration information;

FIG. 12A is a diagram of AI-based uplink positioning;

FIG. 12B is another diagram of AI-based uplink positioning;

FIG. 13A is a schematic flowchart of AI-based positioning;

FIG. 13B is another schematic flowchart of AI-based positioning;

FIG. 14A is still another schematic flowchart of AI-based positioning;

FIG. 14B is yet another schematic flowchart of AI-based positioning;

FIG. 15A is still yet another schematic flowchart of AI-based positioning;

FIG. 15B is a further schematic flowchart of AI-based positioning;

FIG. 16A, FIG. 16B, and FIG. 16C are a schematic flowchart of a positioning method according to an embodiment of this application;

FIG. 17A, FIG. 17B, and FIG. 17C are a schematic flowchart of another positioning method according to an embodiment of this application;

FIG. 18A, FIG. 18B, and FIG. 18C are a schematic flowchart of still another positioning method according to an embodiment of this application;

FIG. 19 is a diagram of a structure of a communication apparatus according to an embodiment of this application; and

FIG. 20 is a diagram of a structure of another communication apparatus according to an embodiment of this application.

## DESCRIPTION OF EMBODIMENTS

To make objectives, technical solutions, and advantages of this disclosure clearer, the following further describes this disclosure in detail with reference to accompanying drawings.

"At least one piece (item)" described in this disclosure below indicates one piece (item) or more pieces (items). "A plurality of (items)" means two (items) or more than two (items). The term "and/or" describes an association relationship between associated objects, and indicates that three relationships may exist. For example, A and/or B may indicate the following three cases: Only A exists, both A and B exist, and only B exists. The character "/" usually indicates an "or" relationship between the associated objects. In addition, it should be understood that although terms such as "first" and "second" may be used in this disclosure to describe objects, these objects are not limited by these terms. These terms are merely used to distinguish the objects from each other.

The terms "include", "have", and any variations thereof mentioned in descriptions of this disclosure below are intended to cover a non-exclusive inclusion. For example, a process, a method, a system, a product, or a device that includes a series of steps or units is not limited to the listed steps or units, but optionally further includes other unlisted steps or units, or optionally further includes other steps or units inherent to the process, the method, the product, or the device. It should be noted that in this disclosure, terms such as "example" or "for example" indicates giving an example, an illustration, or a description. Any method or design solution described by "example" or "for example" in this disclosure should not be construed as being more preferred or having more advantages than another method or design solution. To be precise, use of the terms such as "example" or "for example" is intended to present a related concept in a specific manner.

Embodiments of this application may be applied to various communication systems, for example, a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a communication device, a communication module, a node, a communication node, or the like. In this disclosure, the network element is used as an example for description. For example, the communication system may include at least one terminal device and at least one access network device.

The access network device may send a downlink signal to the terminal device, and/or the terminal device may send an uplink signal to the access network device. In addition, it may be understood that if the communication system includes a plurality of terminal devices, the plurality of terminal devices may also send signals to each other. That is, both a signal sending network element and a signal receiving network element may be terminal devices.

A positioning method provided in embodiments of this application may be applied to a wireless communication system, for example, a 5G system, a 6G system, or a satellite communication system. FIG. 2 is a simplified diagram of a wireless communication system according to an embodiment of this application. As shown in FIG. 2, the wireless communication system includes a radio access network 100. The radio access network 100 may be a next generation (for example, 6G or a higher version) radio access network, or a conventional (for example, 5G, 4G, 3G, or 2G) radio access network. One or more communication devices (120a to 120j, which are collectively referred to as 120) may be interconnected or connected to one or more network devices (110a and 110b, which are collectively referred to as 110) in the radio access network 100. Optionally, FIG. 2 is only a diagram. The wireless communication system may further include another device, for example, may further include a core network device, a wireless relay device, and/or a wireless backhaul device, which are not shown in FIG. 2.

Optionally, during actual application, the wireless communication system may include a plurality of network devices (also referred to as access network devices), or may include a plurality of communication devices. One network device may simultaneously serve one or more communication devices. One communication device may also simultaneously access one or more network devices. Quantities of communication devices and network devices included in the wireless communication system are not limited in embodiments of this application.

The network device may be an entity that is configured to send or receive a signal on a network side. The network device may be an access device via which the communication device accesses the wireless communication system in a wireless manner. For example, the network device may be a base station. The base station may cover various names in the following in a broad sense, or may be replaced with the following names, for example, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master station MeNB, a secondary station SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form that are used by the network device are not limited in embodiments of this application.

The network device may be fixed or mobile. For example, base stations 110a and 110b are stationary and are responsible for wireless transmission and reception in one or more cells from a communication device 120. A helicopter or uncrewed aerial vehicle 120i shown in FIG. 2 may be configured to serve as a mobile base station, and one or more cells may move based on a location of the mobile base station 120i. In other examples, the helicopter or uncrewed aerial vehicle (120i) may be configured to serve as a communication device communicating with the base station 110b.

In this disclosure, a communication apparatus configured to implement functions of the access network may be an access network device, may be a network device having some functions of the access network, or may be an apparatus that can support implementation of functions of the access network, for example, a chip system, a hardware circuit, a software module, or a combination of a hardware circuit and a software module. The apparatus may be installed in the access network device or used together with the access network device. In the method disclosed in this disclosure, description is given by using an example in which the communication apparatus configured to implement functions of the access network device is the access network device.

The communication device may be an entity, such as a mobile phone, configured to receive or transmit a signal on a user side. The communication device may be configured to connect a person, an object, and a machine. The communication device may communicate with one or more core networks via the network device. The communication device includes a handheld device having a wireless connection function, another processing device connected to a wireless modem, a vehicle-mounted device, or the like. The communication device may be a portable, pocket-sized, handheld, computer built-in, or vehicle-mounted mobile apparatus. The communication device 120 may be widely used in various scenarios, for example, cellular communication, device-to-device D2D, vehicle-to-everything V2X, peer-to-peer P2P, machine-to-machine M2M, machine type communication MTC, an internet of things IoT, virtual reality VR, augmented reality AR, industrial control, self driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the communication device 120 are a 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and a wireless terminal such as a smart speaker, a smart coffee machine, and a smart printer in a smart home (smart home). The communication device 120 may be a wireless device in the foregoing various scenarios or an apparatus disposed in a wireless device, for example, a communication module, a modem, or a chip in the foregoing device. The communication device may also be referred to as a terminal, a terminal device, a user equipment (user equipment, UE), a mobile station (mobile station, MS), or a mobile terminal (mobile terminal, MT). The communication device may alternatively be a communication device in a future wireless communication system. The communication device may be used in a dedicated network device or a general-purpose device. A specific technology and a specific device form used by the communication device are not limited in embodiments of this application.

Optionally, the communication device may be configured to serve as a base station. For example, the UE may serve as a scheduling entity that provides sidelink signals between UEs in V2X, D2D, P2P, or the like. As shown in FIG. 2, a cellular phone 120a and a car 120b communicate with each other by using sidelink signals. The cellular phone 120a communicates with a smart home device 120e without relaying a communication signal via the base station 110b.

In this disclosure, a communication apparatus configured to implement functions of the communication device may be a terminal device, may be a terminal device having some functions of the communication device, or may be an apparatus that can support implementation of functions of the communication device, for example, a chip system. The apparatus may be installed in the terminal device or used together with the terminal device. In this disclosure, the chip system may include a chip, or may include a chip and another discrete component. In the technical solutions provided in this disclosure, an example in which the communication apparatus is the terminal device or the UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be deployed in different places. For example, the RRU is remotely deployed in a heavy-traffic region, and the BBU is deployed in a central equipment room. Alternatively, the BBU and the RRU may be deployed in a same equipment room. Alternatively, the BBU and the RRU may be different components at a same rack. Optionally, one cell may correspond to one carrier or component carrier.

Protocol layer structure between an access network device and a terminal device

Communication between the access network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the access network device and the terminal may further include an artificial intelligence (artificial intelligence, AI) layer, used to transmit data related to an AI function.

Data transmission between the access network device and the terminal device is used as an example. Data transmission needs to pass through a user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be configured to forward user data. For example, the non-access stratum forwards uplink data received from the application layer to the SDAP layer, or forwards downlink data received from the SDAP layer to the application layer.

Structure of an access network device

The access network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on protocol layers of the radio network. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that division into processing functions of the CU and the DU based on the protocol layers is merely an example, and there may be another division manner. For example, the CU or the DU may be divided into functions having more protocol layers. For another example, the CU or the DU may be further divided into some processing functions having protocol layers. In a design, some functions of an RLC layer and a function of a protocol layer above the RLC layer are set on the CU, and a remaining function of the RLC layer and a function of a protocol layer below the RLC layer are set on the DU. In another design, division into functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU. In another design, the CU may alternatively have one or more functions of the core network. For example, the CU may be disposed on a network side to facilitate centralized management. In another design, an RU of the DU is disposed remotely. The RU has a radio frequency function.

Optionally, the DU and the RU may be divided at a physical layer (physical layer, PHY). For example, the DU may implement higher-layer functions of the PHY layer, and the RU may implement lower-layer functions of the PHY layer. When sending is performed, functions of the PHY layer may include a cyclic redundancy check (cyclic redundancy check, CRC) code addition, channel coding, rate matching, scrambling, modulation, layer mapping, precoding, resource mapping, physical antenna mapping, and/or radio frequency sending. When receiving is performed, functions of the PHY layer may include CRC, channel decoding, de-rate matching, descrambling, demodulation, layer de-mapping, channel detection, resource de-mapping, physical antenna de-mapping, and/or radio frequency receiving. The higher-layer functions of the PHY layer may include some functions of the PHY layer. For example, the some functions are closer to the MAC layer. The lower-layer functions of the PHY layer may include some other functions of the PHY layer. For example, the some functions are closer to the radio frequency function. For example, the higher-layer functions of the PHY layer may include CRC code addition, channel coding, rate matching, scrambling, modulation, and layer mapping, and the lower-layer functions of the PHY layer may include precoding, resource mapping, physical antenna mapping, and radio frequency sending. Alternatively, the higher-layer function of the PHY layer may include CRC code addition, channel coding, rate matching, scrambling, modulation, layer mapping, and precoding, and the lower-layer functions of the PHY layer may include resource mapping, physical antenna mapping, and radio frequency sending.

For example, functions of the CU may be implemented by one entity, or may be implemented by different entities. For example, functions of the CU may be further divided. To be specific, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of the access network device.

In the foregoing architecture, signaling generated by the CU may be sent to a terminal device via the DU, or signaling generated by a terminal device may be sent to the CU via the DU. For example, signaling at an RRC layer or the PDCP layer is finally processed into signaling at the physical layer and sent to the terminal device, or is converted from signaling received from the physical layer. In this architecture, the signaling of the RRC layer or PDCP layer may be considered to be sent by the DU, or sent by the DU and the RU.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by the modules also fall within the protection scope of this disclosure.

It should be understood that a quantity and types of devices in the communication system shown in FIG. 2 are merely used as an example, and the present disclosure is not limited thereto. During actual application, the communication system may further include more terminal devices and more access network devices, and may further include another network element, for example, may include a core network device and/or a network element configured to implement an artificial intelligence function.

It may be understood that all or some functions implemented by one or more of the terminal device, the access network device, the core network device, or the network element configured to implement the artificial intelligence function may be virtualized, that is, implemented by using one or more of a dedicated processor or a general-purpose processor, and a corresponding software module. Because the terminal device and the access network device are related to an air interface transmission interface, a receiving and sending function of the interface may be implemented by hardware. A core network device, such as an operation administration and maintenance (operation administration and maintenance, OAM) network element, may be virtualized. Optionally, one or more functions of the virtualized terminal device, access network device, core network device, or network element configured to implement the artificial intelligence function may be implemented by a cloud device, for example, a cloud device in an over-the-top (over the top, OTT) system.

Core network elements in embodiments of this application include an AMF, an LMF, and the like.

The AMF entity is mainly responsible for signaling processing, for example, functions such as access control, mobility management, attachment and detachment, and gateway selection. When providing a service for a session in a terminal, the AMF entity provides a control plane storage resource for the session, to store a session identifier, an SMF entity identifier associated with the session identifier, and the like.

The LMF receives a channel measurement result and selects a positioning method to perform positioning measurement. The positioning method selected by the LMF can be a single positioning method or a hybrid positioning method. Related positioning measurement is controlled based on different positioning methods.

It should be noted that the foregoing functional entities are only names, and the names do not constitute a limitation on the entities. For example, the access and mobility management function entity may be replaced with an "access and mobility management function" or have another name. The access and mobility management function entity may also correspond to an entity that includes another function in addition to the access and mobility management function. The location management function entity may also be replaced with a "location management function" or another name, and the location management function entity may also correspond to an entity that includes another function in addition to a location management function. Unified descriptions are provided herein. Details are not described below.

Artificial intelligence (artificial intelligence, AI) and machine learning (machine learning, ML)

AI enables machines to have human intelligence, for example, enables machines to use computer software and hardware to simulate some intelligent human behaviors. To implement the artificial intelligence, a machine learning method may be used. In the machine learning method, a machine obtains a model through learning (or training) by using training data. The model represents mapping from an input to an output. The model obtained through learning may be used for inference (or prediction). To be specific, the model may be used to predict an output corresponding to a given input. The output may also be referred to as an inference result.

(1) AI model

The AI model is a specific implementation of an AI technology function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning model.

Machine learning is an important technical way to implement artificial intelligence. Machine learning may be divided into supervised learning, unsupervised learning, and reinforcement learning.

In terms of supervised learning, based on collected sample values and sample labels, a mapping relationship between the sample values and the sample labels is learned by using a machine learning algorithm, and the learned mapping relationship is expressed by using a machine learning model. A process of training a machine learning model is a process of learning the mapping relationship. For example, during signal detection, a received signal including noise is a sample, and a real constellation point corresponding to the signal is a label. Machine learning expects to learn a mapping relationship between the sample and the label through training, that is, enable a machine learning model to learn a signal detector. During training, a model parameter is optimized by calculating an error between a predicted value of a model and an actual label. Once the mapping relationship is learned, a sample label of each new sample can be predicted by using the learned mapping. The mapping relationship learned through supervised learning may include linear mapping and non-linear mapping. A learning task may be classified into a classification task and a regression task based on a type of a label.

In terms of unsupervised learning, an internal pattern of a sample is explored autonomously by using an algorithm based on only a collected sample value. For a specific type of algorithm of the unsupervised learning, a sample is used as a supervised signal. In other words, a model learns a mapping relationship between samples, which is referred to as self-supervised learning. During training, a model parameter is optimized by calculating an error between a predicted value of the model and the sample. The self-supervised learning may be used for signal compression and decompression restoration. Common algorithms include an autoencoder, a generative adversarial network, and the like.

The reinforcement learning is different from the supervised learning, and is an algorithm that learns a policy of resolving problems by interacting with an environment. Different from supervised learning and unsupervised learning, reinforcement learning does not have clear "correct" action label data. The algorithm needs to interact with the environment to obtain a reward signal fed back by the environment and adjust a decision action to obtain a larger reward signal value. For example, in downlink power control, a reinforcement learning model adjusts a downlink transmit power of each user based on a total system throughput fed back by a wireless network, to expect to obtain a higher system throughput. The goal of reinforcement learning is also to learn a mapping relationship between an environment status and an optimal decision action. However, a label of "correct action" cannot be obtained in advance. Therefore, a network cannot be optimized by calculating an error between an action and the "correct action". Reinforcement learning training is implemented through iterative interaction with the environment.

(2) Neural network

The neural network is a specific implementation form of an AI or machine learning technology. According to a universal approximation theorem, the neural network can approximate any continuous function in theory, so that the neural network has a capability of learning any mapping.

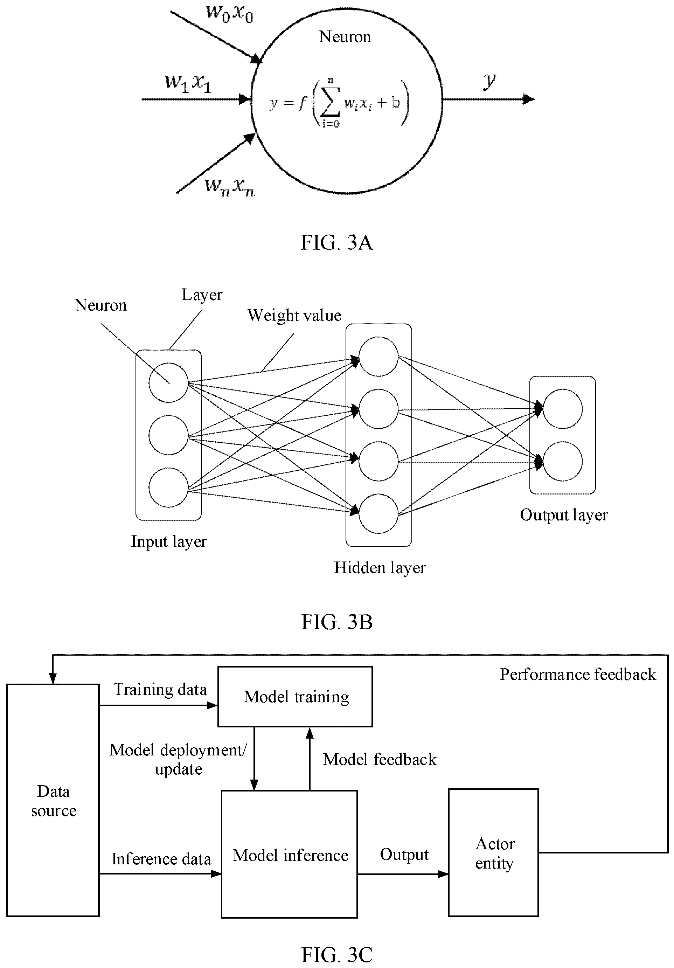

An idea of the neural network comes from a neuron structure of brain tissue. For example, each neuron performs a weighted summation operation on input values of the neuron, and outputs an operation result through an activation function. FIG. 3A is a diagram of a neuron structure. It is assumed that an input of the neuron is $x = [x_0, x_1, \ldots, x_n]$, and weights corresponding to all inputs are respectively $w = [w, w_1, \ldots, w_n]$, where $w_i$ serves as a weight for $x_i$, used to apply weighting to $x_i$. A bias for performing weighted summation on the input values based on the weights is, for example, b. There may be a plurality of forms of the activation function. It is assumed that an activation function of a neuron is $y = f(z) = \max(0, z)$, and an output of the neuron is $y = f\left(\sum_{i=0}^{i=n} w_i * x_i + b\right) = \max\left(0, \sum_{i=0}^{i=n} w_i * x_i + b\right)$. For another example, an activation function of a neuron is $y = f(z) = z$, and an output of the neuron is $y = f\left(\sum_{i=0}^{i=n} w_i * x_i + b\right) = \sum_{i=0}^{i=n} w_i * x_i + b$. Herein, $b$, $w_i$, and $x_i$ may be various possible values such as a decimal, an integer (for example, 0, a positive integer, or a negative integer), or a complex number. Activation functions of different neurons in the neural network may be the same or different.

The neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to FIG. 3B. The input layer of the neural network performs neuron processing on received input information, and transfers a processing result to an intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

For example, the type of the AI model is a neural network. The AI model in this disclosure may be a deep neural network (deep neural network, DNN).

The deep neural network is a specific implementation form of machine learning. According to the universal approximation theorem, the neural network can approximate any continuous function in theory, so that the neural network has a capability of learning any mapping. In a conventional communication system, a communication module needs to be designed with rich expert knowledge. However, a DNN-based deep learning communication system can automatically discover an implicit pattern structure from a large quantity of datasets, establish a mapping relationship between data, and obtain performance better than that of a conventional modeling method.

An idea of the DNN comes from a neuron structure of brain tissue. Each neuron performs a weighted summation operation on input values of the neuron, and outputs a weighted summation result through a non-linear function. Specifically, it is assumed that an input of the neuron is $\mathbf{x} = [x_0, \dots, x_n]$, a weight corresponding to the input is $w = [w_0, \dots, w_n]$, and a bias for weighted summation is b. Forms of the non-linear function may be diversified, and an example is a maximum function of max{0, x} . In this case, execution effect of a neuron may be $\max\{0, \sum_{i=0}^{n} w_i x_i + b\}$ . The DNN usually has a multi-layer structure. Each layer of the DNN may include a plurality of neurons. An input layer processes a received value by using a neuron, and then transfers a processed value to an intermediate hidden layer. Similarly, the hidden layer transfers a calculation result to a final output layer, to generate a final output of the DNN.

The DNN usually has more than one hidden layer, and the hidden layer usually directly affects an information extraction capability and a function fitting capability. Increasing a quantity of hidden layers of the DNN or increasing a width of each layer can improve the function fitting capability of the DNN. A weight in each neuron is a parameter of a DNN model. The model parameter is optimized in a training process, so that the DNN has a data feature extraction capability and a mapping relationship expression capability. The DNN usually optimizes the model parameter according to a supervised learning or unsupervised learning strategy.

Based on a network construction manner, the DNN may be classified into a feedforward neural network (feedforward neural network, FNN), a convolutional neural network (convolutional neural network, CNN), and a recurrent neural network (recurrent neural network, RNN). A characteristic of the FNN network is that every two neurons at adjacent layers are completely connected. Therefore, the FNN usually requires a large amount of storage space, leading to high computing complexity.

The CNN is a neural network dedicated to processing data of a similar grid structure. For example, both time series data (timeline discrete sampling) and image data (two-dimensional discrete sampling) may be considered as the data of the similar grid structure. The CNN performs a convolution operation by capturing partial information through a window with a fixed size, instead of performing an operation by using all input information at one time. This greatly reduces a calculation amount of a model parameter. In addition, based on different types of information captured through the window (for example, a person and an object in a same image are information of different types), different convolution kernel operations may be used for each window, so that the CNN can better extract a feature of input data.

The RNN is a DNN network using feedback time series information. Inputs of the RNN include a new input value at a current moment and an output value of the RNN at a previous moment. The RNN is suitable for obtaining a sequence feature having a time correlation, and is especially suitable for applications such as speech recognition and channel encoding and decoding.

The foregoing FNN, CNN, and RNN are common neural network structures, and these network structures are constructed based on neurons. As described above, each neuron performs a weighted summation operation on input values of the neuron, and outputs a weighted summation result through a non-linear function. In this case, a weight value of the weighted summation operation of the neuron in the neural network and the non-linear function are referred to as parameters of the neural network. A neuron using max{0, x} as a non-linear function is used as an example. Parameters of the neuron that performs a $\max\{0, \sum_{i=0}^{n} w_i x_i + b\}$ operation are a weight value $w = [w_0, \dots, w_n]$, a weighted summation bias b, and the non-linear function max{0, x}. Parameters of all neurons in a neural network form parameters of the neural network.

(3) Training dataset and inference data

The training dataset is used to train an AI model. The training dataset may include an input of the AI model, or include the input of the AI model and a target output of the AI model. The training dataset includes one or more pieces of training data. The training data may be a training sample input into the AI model, or may be the target output of the AI model. The target output may also be referred to as a label or a label sample. The training dataset is one of important parts of machine learning. In essence, model training is to learn some features from the training data, so that an output of the AI model is as close as possible to the target output. For example, a difference between the output of the AI model and the target output is minimized. Composition and selection of the training dataset can determine performance of a trained AI model to some extent.

In addition, a loss function may be defined in a training process of the AI model (for example, a neural network). The loss function describes a gap or difference between an output value of the AI model and a target output value. A specific form of the loss function is not limited in this disclosure. The training process of the AI model is a process in which a model parameter of the AI model is adjusted, so that a value of the loss function is less than a threshold, or a value of the loss function meets a target requirement. For example, the AI model is a neural network, and adjusting a model parameter of the neural network includes adjusting at least one of the following parameters: a quantity of layers and a width of the neural network, a weight of a neuron, or a parameter in an activation function of the neuron.

The inference data may be used as an input of a trained AI model and used for inference by the AI model. During model inference, the inference data is input into the AI model, to obtain a corresponding output, namely, an inference result.

(4) AI model design

The AI model design mainly includes a data collection stage (for example, collection of training data and/or inference data), a model training stage, and a model inference stage, and may further include an inference result application stage. FIG. 3C shows an AI application framework. At the data collection stage, a data source (data source) is used to provide a training dataset and inference data. At the model training stage, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. At the model inference stage, the AI model obtained through training at the model training stage is used to perform inference based on the inference data provided by the data source, to obtain an inference result. This stage can also be understood as follows: The inference data is input into the AI model, to obtain an output by using the AI model. The output is the inference result. The inference result may indicate a configuration parameter used (executed) by an actor object, and/or an operation performed by the actor object. The inference result is published at the inference result application stage. For example, the inference result may be planned by a same actor (actor) entity. For example, the actor entity may send the inference result to one or more actor objects (for example, a core network device, an access network device, or a terminal device) for execution. For another example, the actor entity may further feed back performance of the model to the data source, to facilitate subsequent model updating and training.

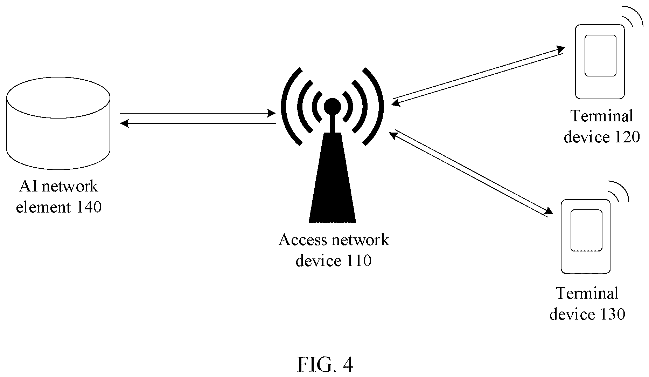

It may be understood that a communication system may include a network element having an artificial intelligence function. The foregoing stages related to the AI model design may be performed by one or more network elements having the artificial intelligence function. In a possible design, the AI function (for example, an AI module or an AI entity) may be configured in an existing network element in the communication system, to implement an AI-related operation, for example, AI model training and/or inference. For example, the existing network element may be an access network device (for example, a gNB), a terminal device, a core network device, a network management system, or the like. The network management system may classify network management work into three types based on an actual requirement of network operation of an operator: operation (Operation), administration (Administration), and maintenance (Maintenance). The network management system may also be referred to as an operation administration and maintenance (operation administration and maintenance, OAM) network element, OAM for short. The operation mainly refers to routine analysis, prediction, planning, and configuration for networks and services. The maintenance mainly refers to routine operation activities such as network and service tests and fault management. The network management system can detect a network running status, optimize network connections and performance, improve network running stability, and reduce network maintenance costs. Alternatively, in another possible design, an independent network element may be introduced into the communication system to perform an AI-related operation, for example, AI model training. The independent network element may be referred to as an AI network element, an AI node, or the like. The name is not limited in this disclosure. The AI network element may be directly connected to the access network device in the communication system, or may be indirectly connected to the access network device via a third-party network element. The third-party network element may be a core network element, for example, an authentication management function (authentication management function, AMF) network element or a user plane function (user plane function, UPF) network element, an OAM, a cloud server, or another network element. This is not limited. For example, refer to FIG. 4. In addition to the access network device 110 and terminal devices 120 and 130 shown in FIG. 2, the communication system introduces an AI network element 140 based on the communication system shown in FIG. 2.

In this disclosure, one parameter or a plurality of parameters may be obtained through inference by using one model. Training processes for different models may be deployed on different devices or nodes, or may be deployed on a same device or node. Inference processes for different models may be deployed on different devices or nodes, or may be deployed on a same device or node. For example, the terminal device completes the model training stage. After training a set of an encoder and decoder, the terminal device may send a model parameter of the decoder to the access network device. For example, the access network device completes the model training stage. After training a set of an encoder and decoder, the access network device may indicate a model parameter of the encoder to the terminal device. For example, an independent AI network element completes the model training stage. After training a set of an encoder and decoder, the AI network element may send a model parameter of the encoder to the terminal device, and send a model parameter of the decoder to the access network device. Then a model inference stage corresponding to the encoder is performed in the terminal device, and a model inference stage corresponding to the decoder is performed in the access network device.

The model parameter may include one or more of the following: a structure parameter of the model (for example, a quantity of layers and/or a weight of the model), an input parameter of the model (for example, an input dimension and a quantity of input ports), or an output parameter of the model (for example, an output dimension and a quantity of output ports). It may be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

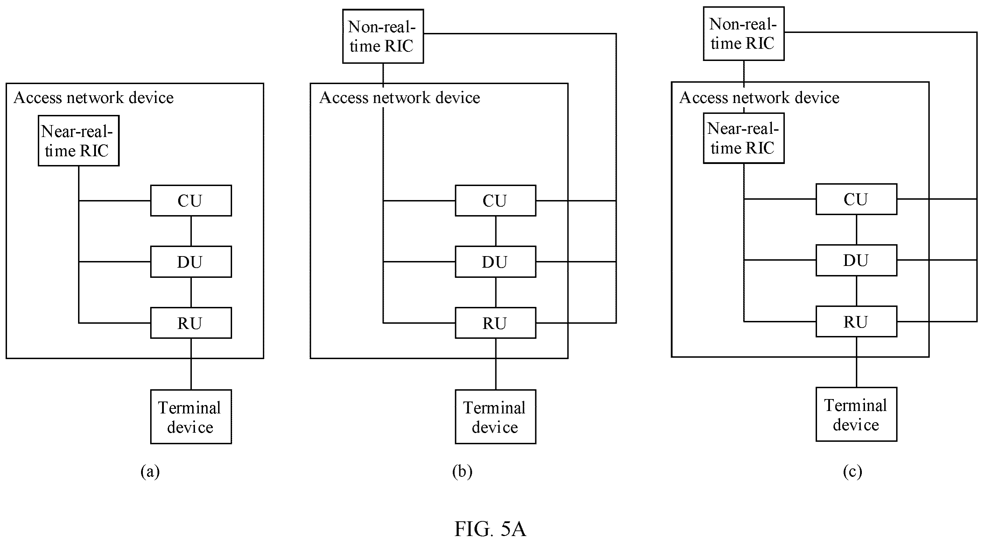

Further, this disclosure provides several network architectures shown in FIG. 5A to FIG. 5D. An example in which model training and/or inference are/is performed in an access network device is used, and division is performed in the access network device to obtain functional modules for model training and/or inference.

As shown in (a) in FIG. 5A, in a first possible implementation, the access network device includes a near-real-time radio access network intelligent controller (RAN intelligent controller, RIC) module, configured to perform model learning and/or inference. For example, the near-real-time RIC may obtain information on a network side and/or a terminal side from at least one of a CU, a DU, and an RU, where the information may include training data or inference data. For example, the near-real-time RIC may be configured to perform model training, and may further perform inference by using a trained model. In addition, optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU.

As shown in (b) in FIG. 5A, in a second possible implementation, in a communication system, a non-real-time RIC may be included outside the access network device. Optionally, the non-real-time RIC may be located in an OAM or a core network device. The non-real-time RIC is configured to perform model learning and inference. For example, the non-real-time RIC may obtain information on a network side and/or a terminal side from at least one of a CU, a DU, and an RU, where the information may include training data or inference data. For example, the non-real-time RIC is configured to perform model training, and may further perform inference by using a trained model. In addition, optionally, the non-real-time RIC may submit an inference result to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU.

As shown in (c) in FIG. 5A, in a third possible implementation, the access network device includes a near-real-time RIC, and a non-real-time RIC is further included outside the access network device. Optionally, the non-real-time RIC may be located in an OAM or a core network device. In a possible design, the non-real-time RIC may be configured to perform model training. The near-real-time RIC may obtain a model parameter of a trained AI model from the non-real-time RIC, obtain information on a network side and/or a terminal side from at least one of a CU, a DU, and an RU, and obtain an inference result by using the information and the trained AI model. Further, the near-real-time RIC may submit the inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU. Alternatively, in a possible design, the near-real-time RIC is configured to perform model training and perform inference by using a trained model, and the non-real-time RIC does not participate in model training or inference. Alternatively, the non-real-time RIC is configured to perform model training and perform inference by using a trained model, and a real-time RIC does not participate in model training or inference. Alternatively, in a possible design, the near-real-time RIC is configured to perform model training and send a model parameter of a trained AI model to the non-real-time RIC, and the non-real-time RIC performs inference by using the trained model.

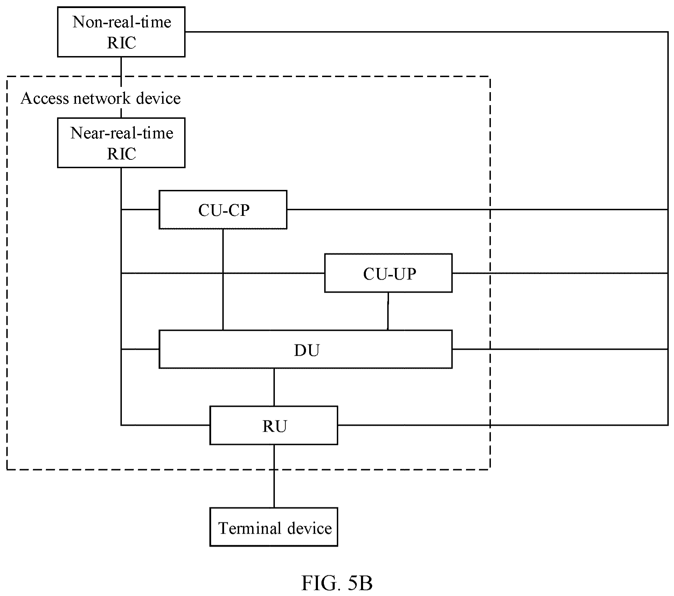

FIG. 5B is an example diagram of a network architecture to which a method provided in this disclosure can be applied. In comparison with (c) in FIG. 5A, in FIG. 5B, the CU is separated into a CU-CP and a CU-UP.

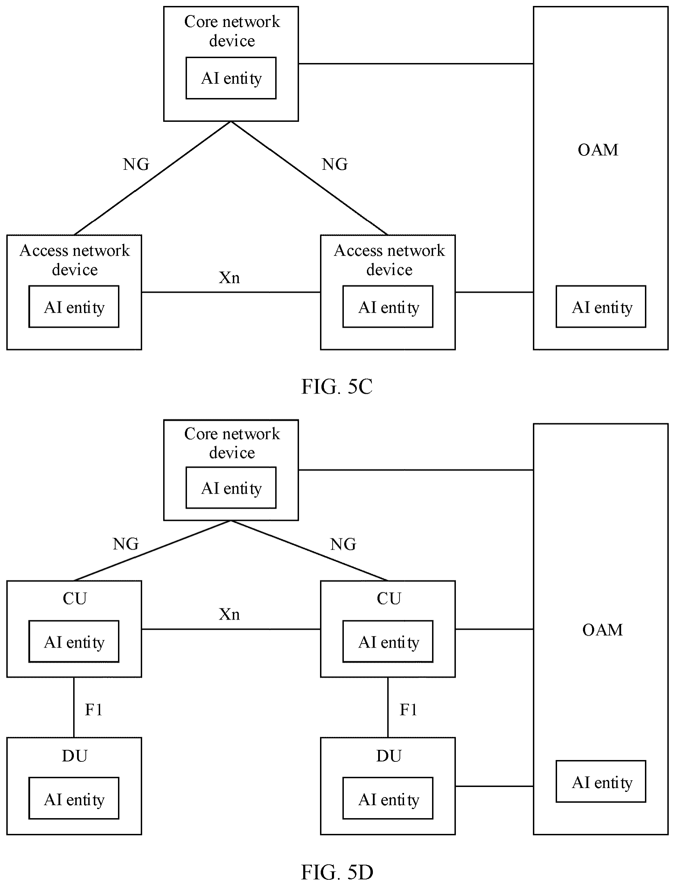

FIG. 5C is an example diagram of a network architecture to which a method provided in this disclosure can be applied. As shown in FIG. 5C, optionally, the access network device includes one or more AI entities, and a function of the AI entity is similar to that of the foregoing near-real-time RIC. Optionally, the OAM includes one or more AI entities, and a function of the AI entity is similar to that of the non-real-time RIC. Optionally, the core network device includes one or more AI entities, and a function of the AI entity is similar to that of the non-real-time RIC. When the OAM and the core network device each include an AI entity, models obtained through training by the AI entities of the OAM and the core network device are different, and/or models for inference are different. In this disclosure, that the models are different includes at least one of the following: structure parameters of the models (for example, quantities of layers and/or weights of the models) are different, input parameters of the models are different, or output parameters of the models are different.

FIG. 5D is an example diagram of a network architecture to which a method provided in this disclosure can be applied. In comparison with FIG. 5C, the access network device in FIG. 5D is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models for inference are different. Optionally, the CU in FIG. 5D may be further split into a CU-CP and a CU-UP. Optionally, one or more AI models may be deployed in the CU-CP, and/or one or more AI models may be deployed in the CU-UP. Optionally, in FIG. 5C or FIG. 5D, the OAM of the access network device and the OAM of the core network device may be separately and independently deployed.

With development of mobile communication, positioning technologies based on a wireless cellular network are widely applied, for example, in an LTE or 5G network. In these positioning technologies, a characteristic parameter between a mobile terminal and a fixed base station is detected, to obtain relative position or angle information between the mobile terminal and the fixed base station and estimate a location of the mobile terminal. Some commonly used characteristic parameters include parameters such as a signal field strength, propagation time or a time difference, and a signal incident angle.

Examples of positioning technology solutions:

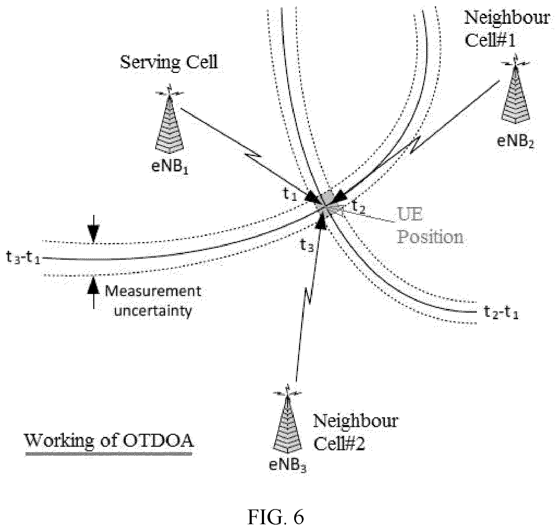

A typical positioning method based on a time difference of arrival (time difference of arrival, TDoA) is shown in FIG. 6. Three synchronized base stations are respectively marked as $eNB_1$, $eNB_2$, and $eNB_3$. Distances between the three synchronized base stations and a UE are respectively $d_1$, $d_2$, and $d_3$. Propagation time of corresponding electromagnetic wave signals is respectively $t_1$, $t_2$, and $t_3$. The three eNBs separately send reference signals to the UE. The reference signals are usually positioning reference signals (positioning reference signal, PRS), and are respectively denoted as $P_1$, $P_2$, and $P_3$. The UE may measure a time difference of arrival between $P_2$ and $P_1$, that is, $t_2 - t_1$, which is also referred to as a reference signal time difference (reference signal time difference, RSTD). $d_2 - d_1$ can be inferred by using $t_2 - t_1$, and a curve is obtained, with each point on the curve satisfying a distance difference of $d_2 - d_1$ between $eNB_2$ and $eNB_1$. Similarly, the UE may measure a time difference of arrival between $P_3$ and $P_1$, that is, $t_3 - t_1$. $d_3 - d_1$ can be inferred by using $t_3 - t_1$, and another curve is obtained, with each point on the curve satisfying a distance difference of $d_3 - d_1$ between $eNB_3$ and $eNB_1$. A location of the UE may be determined by using an intersection point of the two curves, which may be represented by using the following mathematical model, where $(x_i, y_i)$ represents location coordinates of an $i^{th}$ eNB, $(x, y)$ represents to-be-obtained location coordinates of the UE, and c represents a speed of light.

$$\begin{cases} \sqrt{(x_2 - x)^2 + (y_2 - y)^2} - \sqrt{(x_1 - x)^2 + (y_1 - y)^2} = d_2 - d_1 = c(t_2 - t_1) \\ \sqrt{(x_3 - x)^2 + (y_3 - y)^2} - \sqrt{(x_1 - x)^2 + (y_1 - y)^2} = d_3 - d_1 = c(t_3 - t_1) \end{cases} \quad (1)$$

Because a specific synchronization error exists between different eNBs, a corresponding measurement value also has a specific degree of uncertainty, which corresponds to an interval represented by dashed lines in the figure.

The foregoing describes a method of positioning based on sending of the PRS from the eNB to the UE, which is also referred to as downlink time difference of arrival (downlink time difference of arrival, DL-TDoA) or observed time difference of arrival (observed time difference of arrival, OTDoA). Similarly, a method of positioning based on sending of an uplink sounding reference signal (sounding reference signal, SRS) from the UE to a gNB may be further provided, and the method is also referred to as uplink time difference of arrival (uplink time difference of arrival, UL-TDoA). In addition to measuring the time difference, positioning may be performed by measuring an angle of arrival (angle of arrival, AoA) or angle of departure (angle of departure, AoD) relative to the base station.

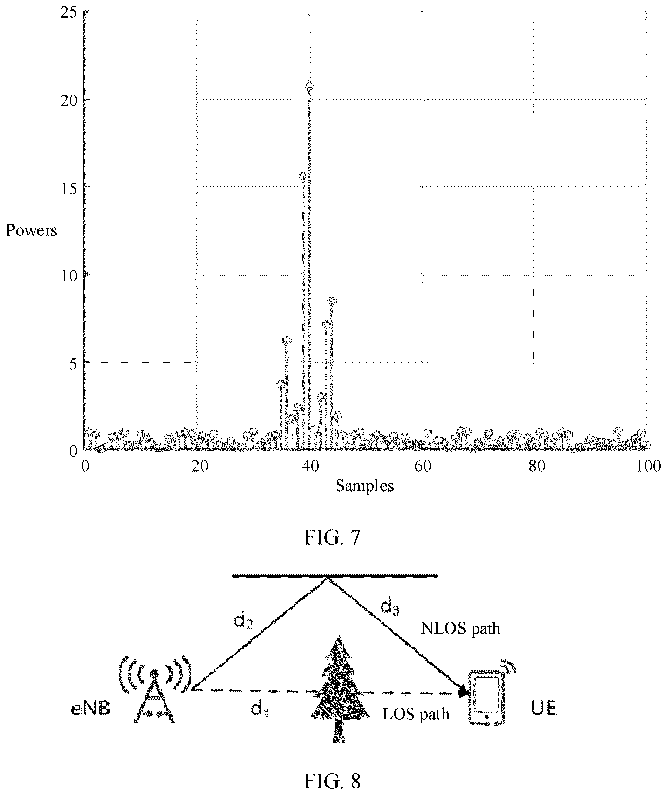

In an actual scenario, due to impact of noise and interference, there is a specific measurement error in a measurement value of time or an angle, and there is also a specific error in a corresponding positioning result. FIG. 7 shows powers |h(t)|^2 of a time domain channel response, at different time-domain sampling points, obtained through reference signal measurement. As shown in the figure, signal powers of time-domain sampling points in a start segment are weaker, and correspond to a noise signal; and signal powers of time-domain sampling points in an intermediate segment are stronger, and correspond to a multipath response of an actual signal. In an actual scenario, a start location of the actual signal needs to be determined in an environment with interference and noise, to obtain accurate signal propagation time. Determining the start location of the actual signal is also referred to as a first path identification problem.

In addition, for positioning measurement, a measurement signal is usually required to be a signal from a line-of-sight (line of sight, LOS) path, because a signal from a non-line-of-sight (non-line of sight, NLOS) path causes a large estimation error. As shown in FIG. 8, a LOS path (dashed line) between an eNB and a UE is blocked by a tree, and an actual path is an NLOS path (solid line) reflected by a wall. Clearly, a distance of the NLOS path is greater than a distance of the LOS path. If the NLOS path is considered as a LOS path during location estimation, a large measurement error may occur. Therefore, classification of the LOS and the NLOS is also important for positioning precision.

The following uses the DL-TDOA method as an example to describe a positioning procedure based on an LTE positioning protocol (LTE positioning protocol, LPP) in a 5G system. The LPP protocol specifies a procedure for information exchange between the UE and a location management function (location management function, LMF). In actual deployment, the UE and the LMF are not directly connected, but are connected in a manner of UE-base station-AMF-LMF. An LPP message is transparently transmitted across the base station and the AMF, thereby implementing interaction between the UE and the LMF. Other possible positioning methods further include enhanced cell identification (enhanced cell identification, E-CID), DL-AoD, UL-TDOA, UL-AoA, and the like. The DL-TDOA is used as an example to describe the positioning procedure in the following. A corresponding solution can be easily generalized to other positioning methods.

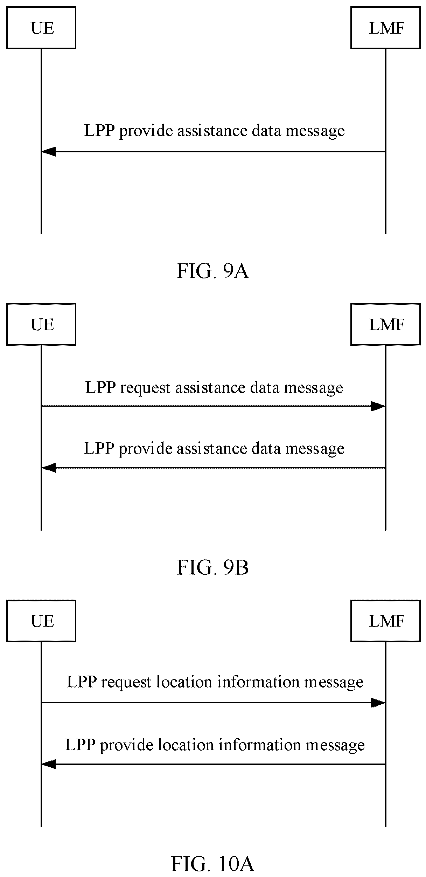

First, the UE and the LMF exchange a positioning capability and positioning assistance information, and this process may be triggered by the LMF or the UE. The positioning capability indicates information such as a positioning method supported by the UE, a used protocol and procedure, and a configurable parameter. The positioning assistance information includes information such as a physical cell ID, a global cell ID, an ID of a transmission reception point (Transmission Reception Point, TRP), a PRS configuration of a transmission reception point, SSB information of a transmission reception point, spatial direction information of a PRS, geographic location coordinates of a transmission reception point, and a time difference between a transmission reception point and a reference node. As shown in FIG. 9A, when the LMF triggers transmission of the positioning assistance information, the LMF determines positioning assistance information that needs to be provided to the UE, and sends an LPP provide assistance data (LPP Provide Assistance Data) message to the UE. As shown in FIG. 9B, when the UE triggers transmission of the positioning assistance information, the UE first determines required positioning assistance information, and sends an LPP request assistance data (LPP Request Assistance Data) message to the LMF, to indicate required positioning assistance information. Then, the LMF sends an LPP provide assistance data (LPP Provide Assistance Data) message to the UE, to provide the positioning assistance information required by the UE.

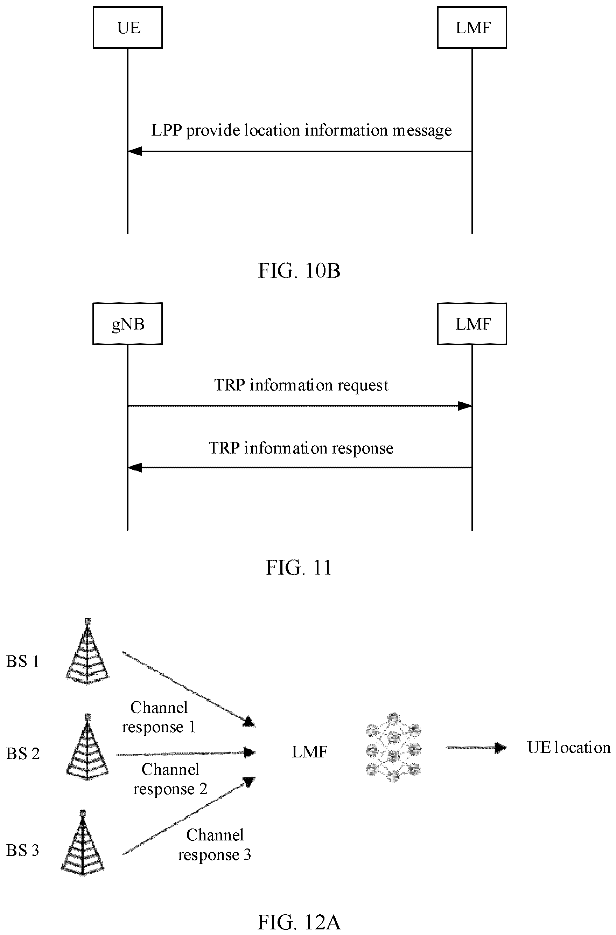

Next, the UE and the LMF exchange location information, and feed back a positioning measurement result of the UE to the LMF. This process may be triggered by the UE or the LMF. The positioning measurement result includes information such as a physical cell ID, a global cell ID, a transmission reception point ID, a downlink reference signal time difference, a downlink PRS received signal power, a timestamp, and measurement quality that correspond to each measurement. As shown in FIG. 10A, when the LMF triggers exchange of the location information, the LMF sends an LPP request location information (LPP Request Location Information) message to the UE, to indicate information such as a required positioning measurement result, measurement configuration information, and a required response time. Then, the UE sends an LPP provide location information (LPP Provide Location Information) message to the LMF before the required response time, to feed back the positioning measurement result. As shown in FIG. 10B, when the UE triggers exchange of the location information, the UE sends an LPP provide location information (LPP Provide Location Information) message to the LMF, to feed back the positioning measurement result.

In addition to exchange of the positioning assistance information and location information between the UE and the LMF, some assistance information also needs to be exchanged between a gNB and the LMF, which is usually triggered by the LMF. Related procedures are specified in the NR positioning protocol A (NR positioning protocol A, NRPPa). The gNB and the LMF are connected by using the AMF. The NRPPa protocol is transparent to the AMF. Cross-AMF transparent transmission of NRPPa data units enables the gNB and the LMF to interact with each other. Positioning assistance information of the gNB includes a physical cell ID, a global cell ID, a transmission reception point ID, a PRS configuration of a transmission reception point, SSB information of a transmission reception point, spatial direction information of a PRS, geographic location coordinates of a transmission reception point, and the like. As shown in FIG. 11, the LMF determines required TRP configuration information, and sends a TRP information request (TRP Information Request) to the gNB, to indicate required TRP configuration information. The gNB sends a TRP information response (TRP Information Response) to the LMF to indicate the TRP configuration information required by the LMF, or sends a TRP information failure message to indicate a cause of failure.

AI-based positioning

Machine learning can be used to enhance positioning precision. Several channel responses are used as an input to an AI model to obtain a final UE location. The AI model may be deployed on an LMF side, or the UE/a base station may extract characteristics of the channel responses by using the AI model. The LMF uses the extracted channel characteristics as an input to the AI model to obtain a location of the UE.

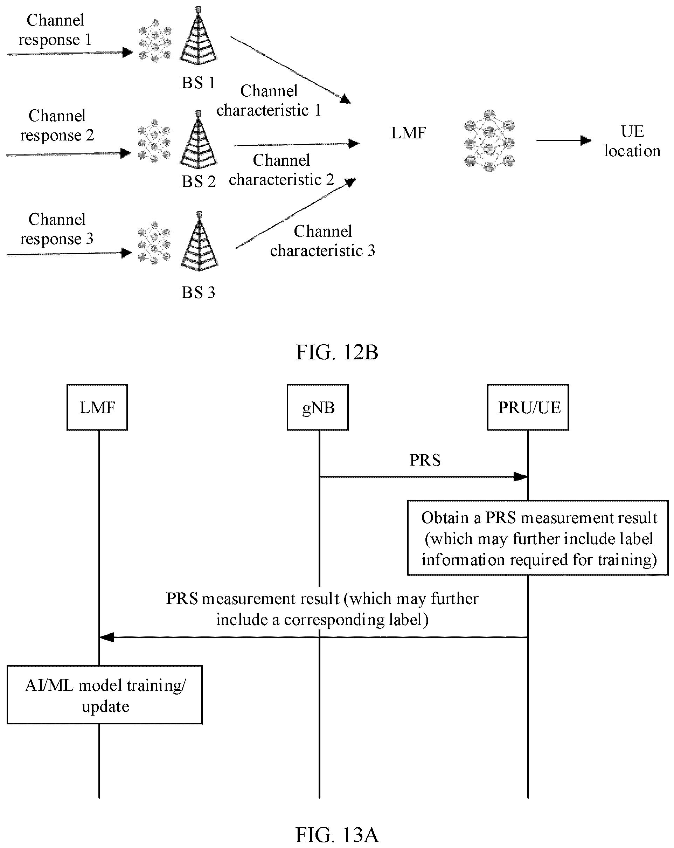

Uplink positioning is used as an example. To be specific, the UE sends a sounding reference signal (sounding reference signal, SRS) to the base station, and the base station obtains a channel response. FIG. 12A is a diagram of an AI-based uplink positioning process. FIG. 12A shows that an AI model is deployed on an LMF side, base stations send channel responses to the LMF, and the LMF uses the channel responses from the plurality of base stations as an input to the AI model, and outputs location information of a UE. Assuming that a quantity of antennas of a base station is 16 and a quantity of subcarriers is 4096, each base station needs to send 16*4096 complex values to the LMF. FIG. 12B shows that AI models are deployed on both base station sides and an LMF side. Each base station uses a channel response as an input. The AI models on the base station sides extract characteristics of channel responses and sends the characteristics to the LMF. The LMF uses the received channel characteristics as an input and uses the AI model on the LMF side to obtain a location of the UE. A dimension of the channel characteristic is determined by an output dimension of the AI model on the base station side. For example, the base station side may extract a characteristic whose dimension is [128] from a channel response whose dimension is [16, 4096], and send the characteristic to the LMF.

Downlink positioning is similar to uplink positioning. A difference lies in that the base station sends a downlink PRS to the UE, and the UE obtains a channel response, and sends the channel response or a characteristic extracted by the AI model from the channel response to the LMF. The characteristic based on the channel response described in this application may be the channel response itself, or may be a characteristic extracted by the AI model from the channel response.

Current research on AI-based positioning includes the following scenarios:

Scenario 1: UE-assisted direct AI/ML positioning using an LMF-side model

FIG. 13A is a schematic flowchart of an AI-based positioning process. In a model training/update phase, a gNB sends a PRS to a positioning reference unit (positioning reference unit, PRU)/a UE. The UE obtains a PRS measurement result, and may further obtain label information required for training. The PRU/UE sends the PRS measurement result to an LMF, which may further include a corresponding label. The LMF performs AI/ML model training/update.

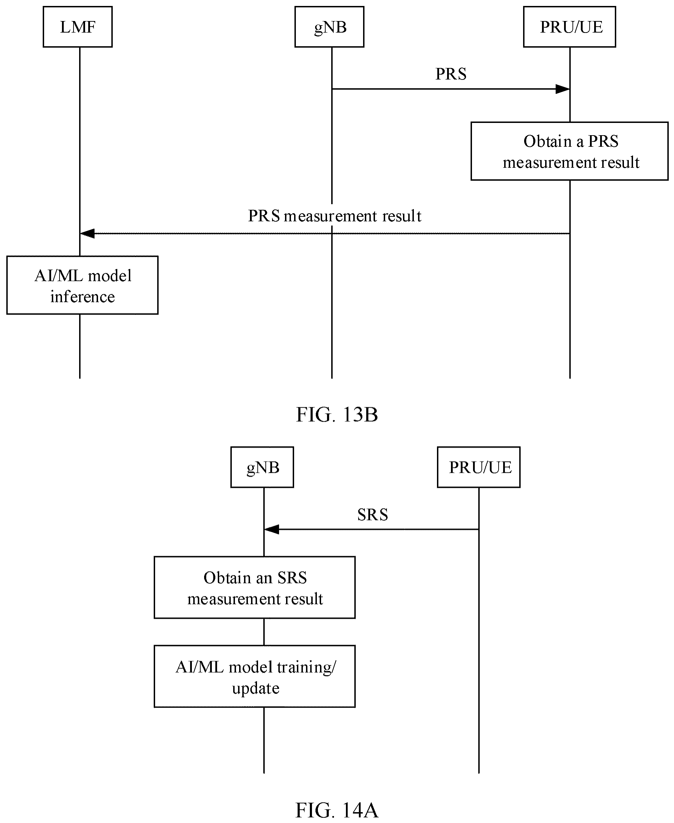

FIG. 13B is a schematic flowchart of another AI-based positioning process. In a model inference phase, a gNB sends a PRS to a UE. The UE obtains a PRS measurement result, and the UE sends the PRS measurement result to an LMF. The LMF performs AI/ML model inference.

Scenario 2: NG-RAN-assisted AI/ML-assisted positioning using a gNB side model

FIG. 14A is a schematic flowchart of still another AI-based positioning process. In a model training/update phase, a PRU/UE sends an SRS to a gNB, and the SRS may further include a training label (a line-of-sight path identification result, a non-line-of-sight path identification result, a first-path time-of-arrival estimation result, and an angle-of-arrival estimation result). The gNB obtains an SRS measurement result, and the gNB performs AI/ML model training/update.

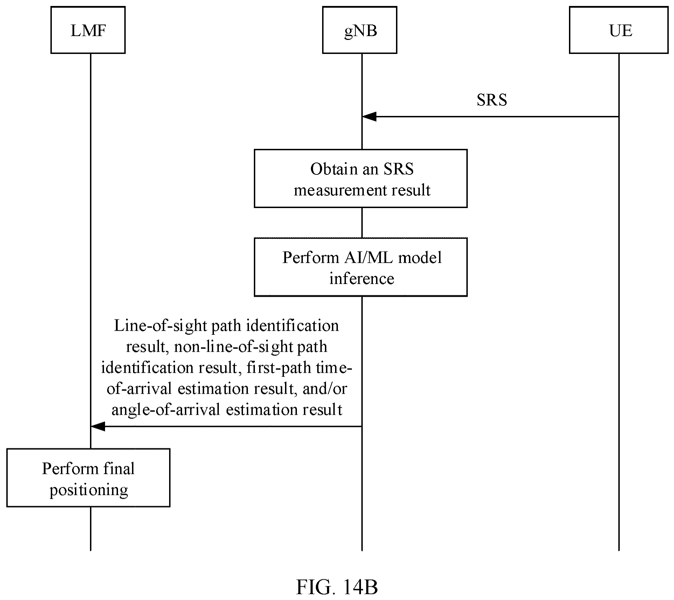

FIG. 14B is a schematic flowchart of yet another AI-based positioning process. In a model inference phase, a UE sends an SRS to a gNB. The gNB obtains an SRS measurement result, and the gNB performs AI/ML model inference. The gNB sends a line-of-sight path identification result, a non-line-of-sight path identification result, a first-path time-of-arrival estimation result, and/or an angle-of-arrival estimation result to an LMF. The LMF performs final positioning.

Scenario 3: NG-RAN-assisted direct AI/ML positioning using an LMF side model

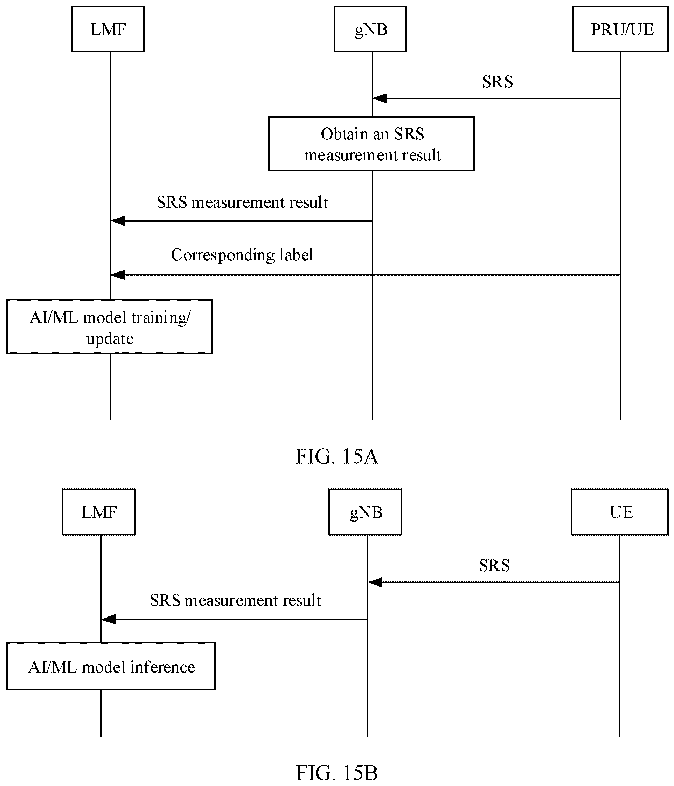

FIG. 15A is a schematic flowchart of still yet another AI-based positioning process. In a model training/update phase, a PRU/UE sends an SRS to a gNB. The gNB obtains an SRS measurement result, and the gNB sends the SRS measurement result to an LMF. The PRU/UE sends a corresponding label to the LMF, and the LMF performs AI/ML model training/update.

FIG. 15B is a schematic flowchart of a further AI-based positioning process. In a model inference phase, a UE sends an SRS to a gNB. The gNB sends an SRS measurement result to an LMF. The LMF performs AI/ML model inference.

Based on an AI-based positioning principle, for a problem raised in the background technology that signaling overheads are high if a network side positions a plurality of closely located terminals one by one, this application provides a positioning solution. A plurality of terminals send respective capability information to an LMF or an access network device, and the LMF or the access network device sends a plurality of pieces of second information to the plurality of terminals. The second information indicates that a first positioning result of a first terminal is used to determine a positioning result of at least one second terminal, and the plurality of terminals include the first terminal and the at least one second terminal. According to the technical solutions of this application, a network side does not need to perform positioning measurement on each terminal. Positioning measurement is performed on the first terminal, and a positioning result of the first terminal may be used to determine a positioning result of another terminal, thereby reducing signaling overheads.

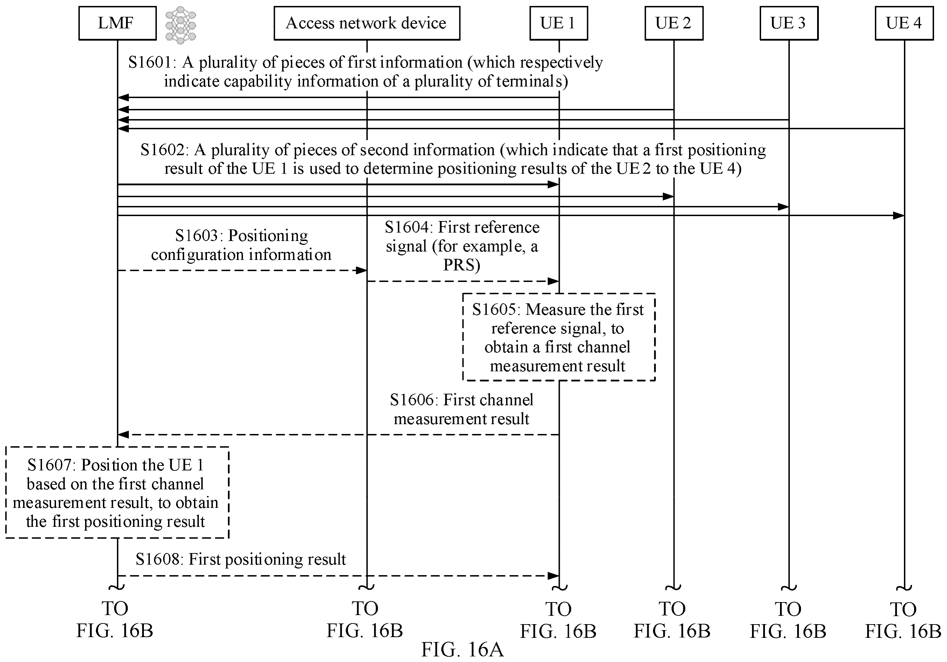

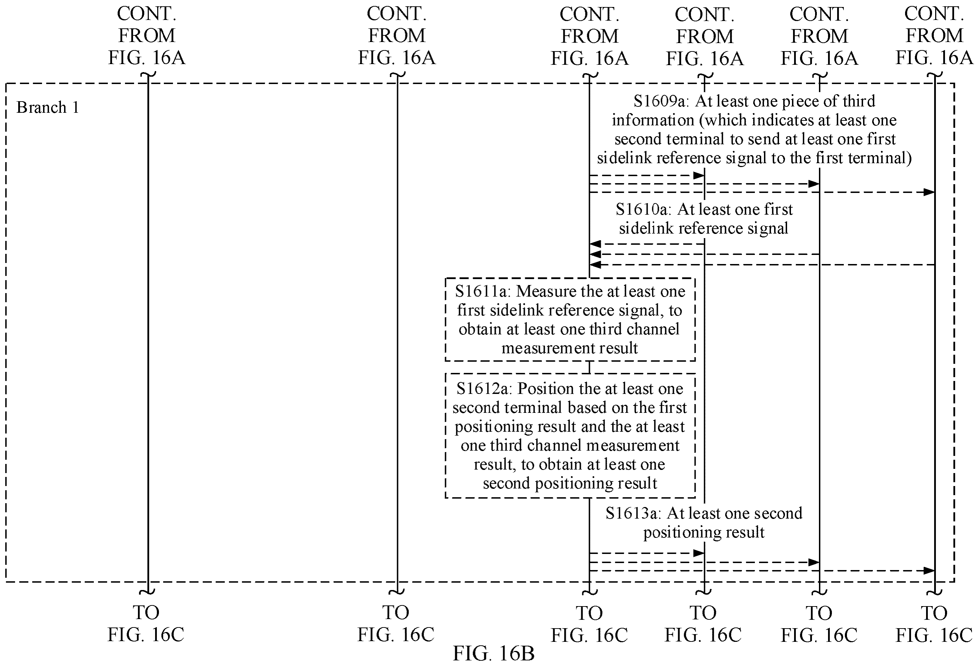

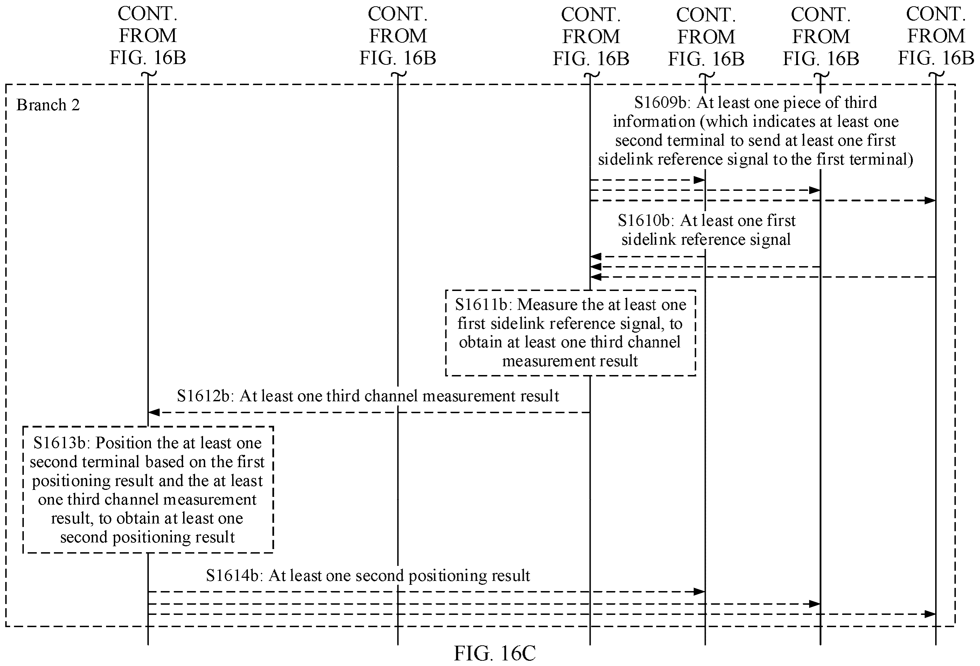

FIG. 16A, FIG. 16B, and FIG. 16C are a schematic flowchart of a positioning method according to an embodiment of this application. The method is based on Scenario 1. An AI model is set on an LMF side for downlink positioning. For example, the method may include the following steps.

S1601: A plurality of terminals (a UE 1 to a UE 4 in the figure) respectively send a plurality of pieces of first information to an LMF.

Correspondingly, the LMF respectively receives the plurality of pieces of first information from the plurality of terminals.

In this embodiment, the plurality of terminals are close to each other. For example, a distance between terminals in the plurality of terminals is within a specified threshold range.

The plurality of pieces of first information respectively indicate capability information of the plurality of terminals. The capability information may include at least one of the following information: computing capability information, storage capability information, model training capability information, model update capability information, and capability information of supporting a model with a specific function. The model training capability information may indicate a specific model training capability, and the model update capability information may indicate a specific model update capability. For example, one bit may indicate the capability information of supporting a model of a specific function. For example, one bit indicates capability information of supporting a model with a positioning function. When a value of the bit is "1", it indicates that the positioning function is supported. When a value of the bit is "0", it indicates that the positioning function is not supported.

For example, the UE 1 to the UE 4 respectively send positioning requests to the LMF, and report the first information. The UE 1 to the UE 4 may send the first information after sending the positioning requests, or the UE 1 to the UE 4 may include the first information in the positioning request.

S1602: After receiving the plurality of pieces of first information, the LMF sends a plurality of pieces of second information to the plurality of terminals.

After receiving the plurality of pieces of first information, the LMF obtains the capability information of the plurality of terminals. The LMF determines a primary positioning terminal based on the capability information of the plurality of terminals. A positioning result of the primary positioning terminal is used to determine a positioning result of another terminal in the plurality of terminals.

In an example, the LMF compares computing capabilities of the plurality of terminals based on the computing capability information of the plurality of terminals, and determines that a computing capability of the UE 1 is greater than computing capabilities of the other terminals. In this case, the UE 1 is determined as the primary positioning terminal.

In another example, the LMF compares storage capabilities of the plurality of terminals based on the storage capability information of the plurality of terminals, and determines that a storage capability of the UE 1 is greater than storage capabilities of the other terminals. In this case, the UE 1 is determined as the primary positioning terminal.

In still another example, the LMF compares model training capabilities of the plurality of terminals based on the model training capability information of the plurality of terminals, and determines that a model training capability of the UE 1 is greater than model training capabilities of the other terminals. In this case, the UE 1 is determined as the primary positioning terminal.

In yet another example, the LMF compares model update capabilities of the plurality of terminals based on the model update capability information of the plurality of terminals, and determines that a model update capability of the UE 1 is greater than model update capabilities of the other terminals. In this case, the UE 1 is determined as the primary positioning terminal.

In still yet another example, the LMF requires the primary positioning terminal to support a positioning function. The LMF determines, based on the capability information of supporting a model with a specific function, that the UE 1 supports the positioning function. In this case, the UE 1 is determined as the primary positioning terminal.

After determining the primary positioning terminal, that is, determining that the positioning result of the primary positioning terminal is used to determine the positioning result of the another terminal in the plurality of terminals, the LMF respectively sends the plurality of pieces of second information to the plurality of terminals. In this embodiment, the plurality of terminals include a first terminal and at least one second terminal. The second information indicates that a first positioning result of the first terminal (for example, the UE 1) is used to determine a positioning result of at least one second terminal (for example, a UE 2 to the UE 4).

It can be learned that the second information is based on the capability information of the plurality of terminals. In other words, the second information is related to the capability information of the plurality of terminals.

For example, the second information may further include an identifier of the first terminal and/or an identifier of the at least one second terminal.

For example, the LMF may broadcast the second information, or may respectively send the second information to the plurality of terminals.

Further, the method may include the following steps (represented by dashed lines in the figure).

S1603: The LMF sends positioning configuration information to an access network device.

The positioning configuration information is used to configure the access network device to send a first reference signal to the UE 1. The positioning configuration information further indicates a sending periodicity, a time-frequency resource, and the like of the first reference signal. For example, the first reference signal may be a PRS.

S1604: After receiving the positioning configuration information, the access network device sends the first reference signal to the UE 1 based on the positioning configuration information.

The access network device sends the first reference signal to the UE 1 on a configured time-frequency resource based on the configured sending periodicity.

S1605: After receiving the first reference signal, the UE 1 measures the first reference signal, to obtain a first channel measurement result.

After receiving the first reference signal, the UE 1 measures the first reference signal, so that the UE 1 can measure a channel between the access network device and the UE 1, to obtain the first channel measurement result. That is, the first channel measurement result is obtained by the UE 1 by measuring the first reference signal. For example, the first channel measurement result may be a channel impulse response (channel impulse response, CIR).

S1606: The UE 1 sends the first channel measurement result to the LMF.

S1607: After receiving the first channel measurement result, the LMF positions the UE 1 based on the first channel measurement result, to obtain the first positioning result.

S1608: The LMF sends the first positioning result to the UE 1.

Correspondingly, the UE 1 receives the first positioning result.

For example, the first positioning result may be an absolute location of the UE 1.

The following procedure describes how to obtain the positioning result of the another terminal based on the first positioning result, and may include the following several branches:

Branch 1:

S1609a: The UE 1 respectively sends at least one piece of third information to the at least one second terminal (including the UE 2 to the UE 4).

After receiving the second information and a positioning result of the UE 1, the UE 1 respectively sends the at least one piece of third information to the at least one second terminal (including the UE 2 to the UE 4). The at least one piece of third information indicates the at least one second terminal to send at least one first sidelink reference signal to the first terminal. That is, the UE 1 triggers the UE 2 to the UE 4 to send first sidelink reference signals to the UE 1.

S1610a: After receiving the at least one piece of third information, the at least one second terminal (including the UE 2 to the UE 4) respectively sends the at least one first sidelink reference signal to the UE 1 based on the at least one piece of third information.

For example, the first sidelink reference signal may be a sidelink positioning reference signal (sidelink positioning reference signal, SL-PRS).

S1611a: After receiving the at least one first sidelink reference signal from the at least one second terminal, the UE 1 measures the at least one first sidelink reference signal to obtain at least one third channel measurement result.

If the UE 1 receives the first sidelink reference signal by using a channel between the UE 1 and the UE 2/3/4, the third channel measurement result is a measurement result of the channel between the UE 1 and the UE 2/3/4. For example, the third channel measurement result may be a ranging result and/or an angle measurement result of the UE 2/3/4.

S1612a: The UE 1 positions the at least one second terminal based on the first positioning result and the at least one third channel measurement result, to obtain at least one second positioning result.

As described above, the UE 1 has a strong computing capability, storage capability, model training capability, model update capability, positioning function, and/or the like. Therefore, the UE 1 may position the at least one second terminal based on the first positioning result of the UE 1 and the at least one third channel measurement result, to obtain the at least one second positioning result. For example, the first positioning result may be an absolute location of the UE 1. The UE 1 may obtain absolute location information of the UE 2/3/4 based on the first positioning result (the absolute location) and ranging/angle measurement information (a location relative to the UE 1) between the UE 1 and the UE 2/3/4.

S1613a: The UE 1 respectively sends the at least one second positioning result to the at least one second terminal.

It can be learned that in Branch 1, the UE 1 triggers the UE 2 to the UE 4 to send SL-PRSs to the UE 1, and the UE 1 determines positioning results of the UE 2 to the UE 4.

Branch 2:

S1609b: The UE 1 sends at least one piece of third information to the at least one second terminal (including the UE 2 to the UE 4).

A specific implementation of this step is the same as that of step S1609a, and details are not described herein again.

S1610b: After receiving the at least one piece of third information, the at least one second terminal (including the UE 2 to the UE 4) respectively sends at least one first sidelink reference signal to the UE 1.

A specific implementation of this step is the same as that of step S1610a, and details are not described herein again.

S1611b: After receiving the at least one first sidelink reference signal from the at least one second terminal, the UE 1 measures the at least one first sidelink reference signal to obtain at least one third channel measurement result.

A specific implementation of this step is the same as that of step S1611a, and details are not described herein again.

S1612b: The UE 1 sends the at least one third channel measurement result to the LMF.

After obtaining the at least one third channel measurement result through measurement, the UE 1 may send the at least one third channel measurement result to the LMF.

S1613b: After receiving the at least one third channel measurement result, the LMF positions the at least one second terminal based on the first positioning result and the at least one third channel measurement result, to obtain at least one second positioning result.

For example, the first positioning result may be an absolute location of the UE 1. The LMF may obtain absolute location information of the UE 2/3/4 based on the first positioning result (the absolute location) and ranging/angle measurement information (a location relative to the UE 1) between the UE 1 and the UE 2/3/4.

S1614b: The LMF respectively sends the at least one second positioning result to the at least one second terminal.

It can be learned that in Branch 2, the UE 1 triggers the UE 2 to the UE 4 to send SL-PRSs to the UE 1, and the LMF determines positioning results of the UE 2 to the UE 4.

Branch 3 (not shown in the figure):

c1: The UE 1 sends at least one second sidelink reference signal to the at least one second terminal (including the UE 2 to the UE 4).

After receiving the second information and a positioning result of the UE 1, the UE 1 sends the at least one second sidelink reference signal to the at least one second terminal (including the UE 2 to the UE 4). For example, the second sidelink reference signal may be an SL-PRS.

c2: After receiving the at least one second sidelink reference signal, the at least one second terminal (including the UE 2 to the UE 4) respectively measures the second sidelink reference signal, to obtain at least one fourth channel measurement result.

If the UE 2/3/4 receives the second sidelink reference signal by using a channel between the UE 1 and the UE 2/3/4, the fourth channel measurement result is a measurement result of the channel between the UE 1 and the UE 2/3/4. For example, the fourth channel measurement result may be a ranging result and/or an angle measurement result of the UE 2/3/4.

c3: The at least one second terminal (including the UE 2 to the UE 4) respectively sends the at least one fourth channel measurement result to the LMF.

c4: After receiving the at least one fourth channel measurement result, the LMF positions the at least one second terminal based on the first positioning result and the at least one fourth channel measurement result, to obtain at least one second positioning result.

For example, the first positioning result may be an absolute location of the UE 1. The LMF may obtain absolute location information of the UE 2/3/4 based on the first positioning result (the absolute location) and ranging/angle measurement information (a location relative to the UE 1) between the UE 1 and the UE 2/3/4.

c5: The LMF respectively sends the at least one second positioning result to the at least one second terminal.

It can be learned that in Branch 3, the UE 1 sends SL-PRSs to the UE 2/3/4, the UE 2/3/4 performs channel measurement, and sends channel measurement results to the LMF, and the LMF performs positioning on the UE 2/3/4.

Branch 4 (not shown in the figure):

d1: The UE 1 sends at least one second sidelink reference signal to the at least one second terminal (including the UE 2 to the UE 4).

For specific implementation of this step, refer to step c1, and details are not described herein again.

d2: After receiving the at least one second sidelink reference signal, the at least one second terminal (including the UE 2 to the UE 4) respectively measures the second sidelink reference signal, to obtain at least one fourth channel measurement result.

For specific implementation of this step, refer to step c2, and details are not described herein again.

d3: The at least one second terminal (including the UE 2 to the UE 4) respectively sends the at least one fourth channel measurement result to the UE 1.

As described above, the UE 1 has a strong computing capability, storage capability, model training capability, model update capability, positioning function, and/or the like. Therefore, after obtaining the fourth channel measurement result, the UE 2/3/4 may respectively send the fourth channel measurement result to the UE 1.

d4: After receiving the at least one fourth channel measurement result, the UE 1 positions the at least one second terminal based on the first positioning result and the at least one fourth channel measurement result, to obtain at least one second positioning result.

The UE 1 may position the at least one second terminal based on the first positioning result of the UE 1 and the at least one fourth channel measurement result, to obtain at least one second positioning result. For example, the first positioning result may be an absolute location of the UE 1. The UE 1 may obtain absolute location information of the UE 2/3/4 based on the first positioning result (the absolute location) and ranging/angle measurement information (a location relative to the UE 1) between the UE 1 and the UE 2/3/4.

d5: The UE 1 respectively sends the at least one second positioning result to the at least one second terminal.

It can be learned that in Branch 4, the UE 1 sends SL-PRSs to the UE 2/3/4, the UE 2/3/4 performs channel measurement, and sends channel measurement results to the UE 1, and the UE 1 performs positioning on the UE 2/3/4.

It can be learned from the foregoing branches that the primary positioning terminal UE 1 exchanges sidelink information with another terminal, to implement positioning of the another terminal.

Positioning of the UE 1 to the UE 4 is implemented through the foregoing procedure. When the closely located UE 1 to the UE 4 need to be positioned at the same time, a combined positioning method of network downlink direct positioning and coordinated positioning is used, which can reduce signaling and calculation overheads while ensuring reliable positioning performance. In addition, for terminals with different hardware capabilities, a network side determines the primary positioning terminal, which can also ensure reliable positioning performance.

According to the positioning method provided in this embodiment of this application, a network side does not need to perform positioning measurement on each terminal. Positioning measurement is performed on the first terminal, and a positioning result of the first terminal may be used to determine a positioning result of another terminal, thereby reducing signaling overheads.

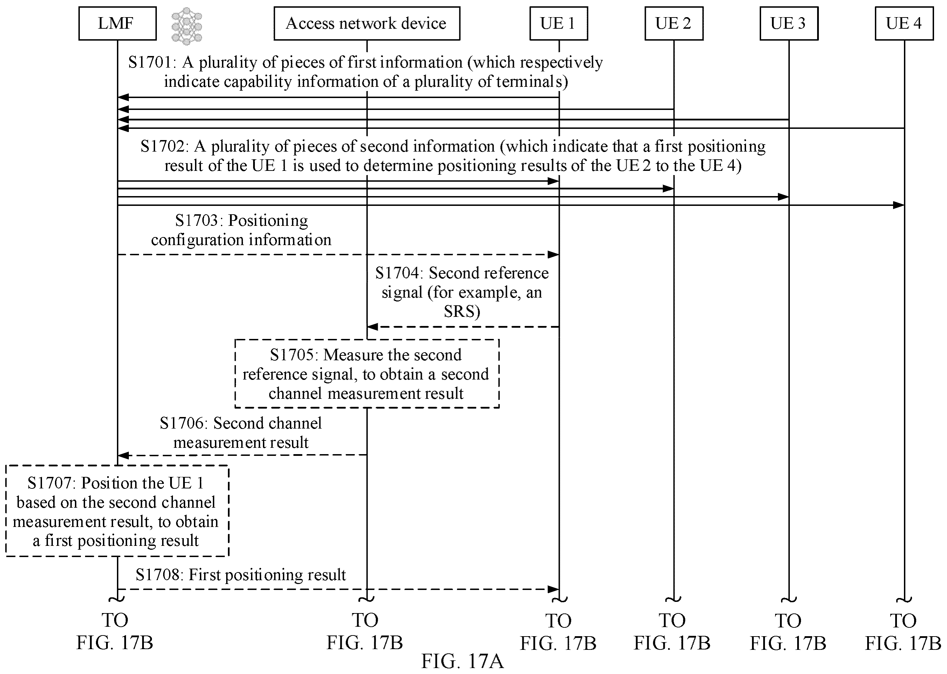

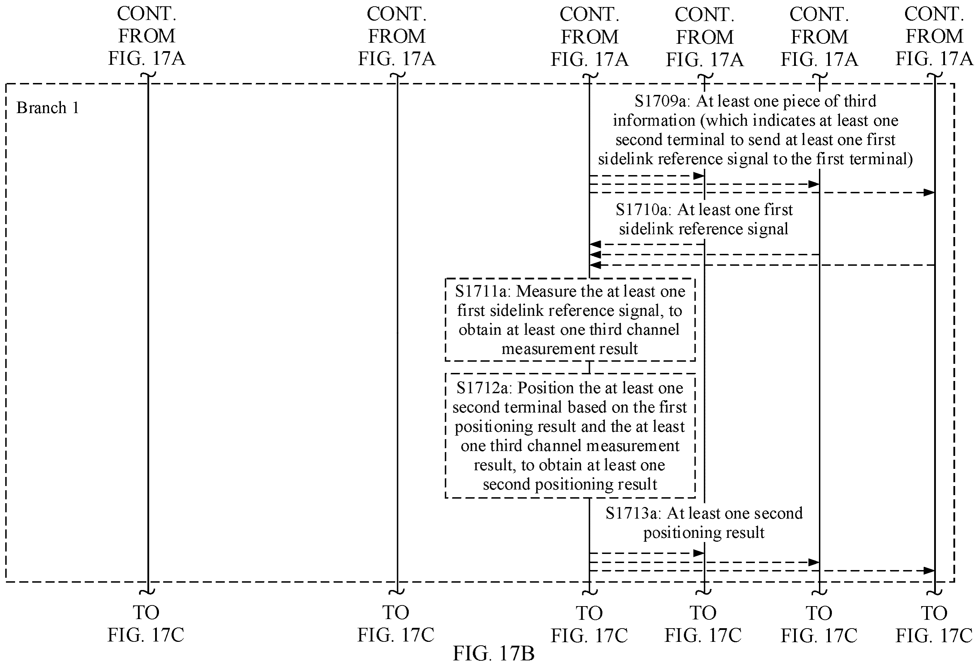

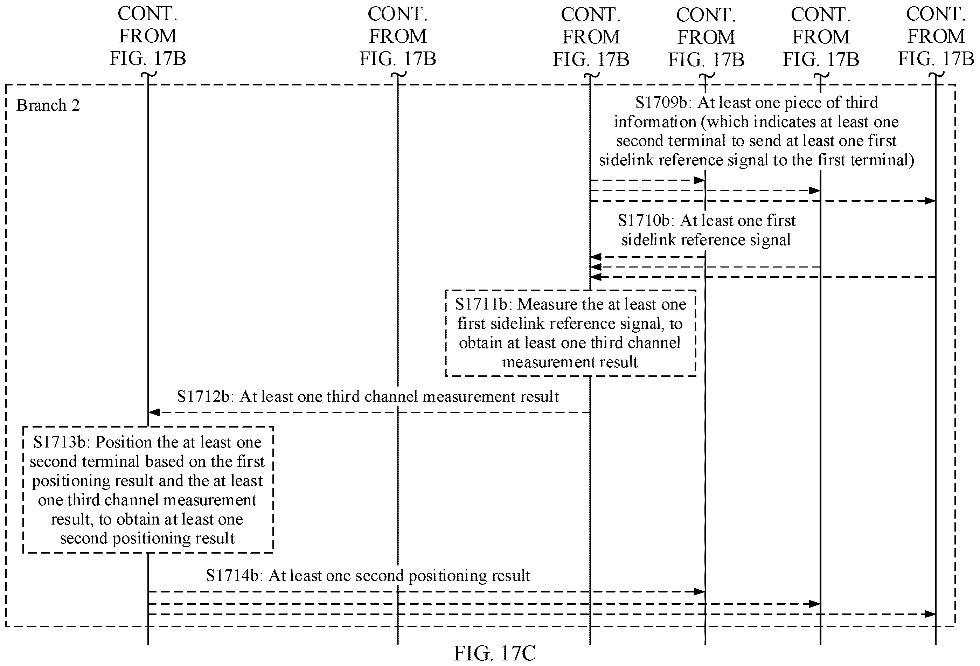

FIG. 17A, FIG. 17B, and FIG. 17C are a schematic flowchart of another positioning method according to an embodiment of this application. The method is based on Scenario 3. An AI model is set on an LMF side for uplink positioning. For example, the method may include the following steps.

S1701: A plurality of terminals (a UE 1 to a UE 4 in the figure) respectively send a plurality of pieces of first information to an LMF.

Correspondingly, the LMF respectively receives the plurality of pieces of first information from the plurality of terminals.

For specific implementation of this step, refer to step S1601, and details are not described herein again.

S1702: The LMF sends a plurality of pieces of second information to the plurality of terminals.

For specific implementation of this step, refer to step S1602, and details are not described herein again.

Further, the method may include the following steps (represented by dashed lines in the figure).

S1703: The LMF sends positioning configuration information to the UE 1.

The positioning configuration information is used to configure the UE 1 to send a second reference signal to an access network device. The positioning configuration information further indicates a sending periodicity, a time-frequency resource, and the like of the second reference signal. For example, the second reference signal may be an SRS.

S1704: After receiving the positioning configuration information, the UE 1 sends the second reference signal to the access network device based on the positioning configuration information.

The UE 1 sends the second reference signal to the access network device on a configured time-frequency resource based on the configured sending periodicity.

S1705: After receiving the second reference signal, the access network device measures the second reference signal, to obtain a second channel measurement result.

After receiving the second reference signal, the access network device measures the second reference signal, so that the access network device can measure a channel between the access network device and the UE 1, to obtain the second channel measurement result. That is, the second channel measurement result is obtained by the access network device by measuring the second reference signal. For example, the second channel measurement result may be a channel impulse response.

S1706: The access network device sends the second channel measurement result to the LMF.

S1707: After receiving the second channel measurement result, the LMF positions the UE 1 based on the second channel measurement result, to obtain a first positioning result.

S1708: The LMF sends the first positioning result to the UE 1.

The following procedure describes how to obtain the positioning result of the another terminal based on the first positioning result, and may include the following several branches:

Branch 1:

S1709a: The UE 1 sends at least one piece of third information to at least one second terminal (including a UE 2 to the UE 4).

The at least one piece of third information indicates the at least one second terminal to send at least one first sidelink reference signal to the first terminal.

S1710a: After receiving the at least one piece of third information, the at least one second terminal (including the UE 2 to the UE 4) respectively sends the at least one first sidelink reference signal to the UE 1.

S1711a: The UE 1 measures the at least one first sidelink reference signal to obtain at least one third channel measurement result.

S1712a: The UE 1 positions the at least one second terminal based on the first positioning result and the at least one third channel measurement result, to obtain at least one second positioning result.

S1713a: The UE 1 respectively sends the at least one second positioning result to the at least one second terminal.

For specific implementation of Branch 1, refer to corresponding descriptions of Branch 1 in the embodiment shown in FIG. 16A, FIG. 16B, and FIG. 16C. Details are not described herein again.

Branch 2:

S1709b: The UE 1 sends at least one piece of third information to at least one second terminal (including a UE 2 to the UE 4).

The at least one piece of third information indicates the at least one second terminal to send at least one first sidelink reference signal to the first terminal.

S1710b: After receiving the at least one piece of third information, the at least one second terminal (including the UE 2 to the UE 4) respectively sends the at least one first sidelink reference signal to the UE 1.

S1711b: The UE 1 measures the at least one first sidelink reference signal, to obtain at least one third channel measurement result.

S1712b: The UE 1 sends the at least one third channel measurement result to the LMF.

S1713b: After receiving the at least one third channel measurement result, the LMF positions the at least one second terminal based on the first positioning result and the at least one third channel measurement result, to obtain at least one second positioning result.

S1714b: The LMF respectively sends the at least one second positioning result to the at least one second terminal.

For specific implementation of Branch 2, refer to corresponding descriptions of Branch 2 in the embodiment shown in FIG. 16A, FIG. 16B, and FIG. 16C. Details are not described herein again.

Branch 3: Refer to the descriptions in the embodiment shown in FIG. 16A, FIG. 16B, and FIG. 16C.

Branch 4: Refer to the descriptions in the embodiment shown in FIG. 16A, FIG. 16B, and FIG. 16C.

It can be learned from the foregoing branches that the primary positioning terminal UE 1 exchanges sidelink information with another terminal, to implement positioning of the another terminal.

Positioning of the UE 1 to the UE 4 is implemented through the foregoing procedure. When the closely located UE 1 to the UE 4 need to be positioned at the same time, a combined positioning method of network downlink direct positioning and coordinated positioning is used, which can reduce signaling and calculation overheads while ensuring reliable positioning performance. In addition, for terminals with different hardware capabilities, a network side determines the primary positioning terminal, which can also ensure reliable positioning performance.

According to the positioning method provided in this embodiment of this application, a network side does not need to perform positioning measurement on each terminal. Positioning measurement is performed on the first terminal, and a positioning result of the first terminal may be used to determine a positioning result of another terminal, thereby reducing signaling overheads.

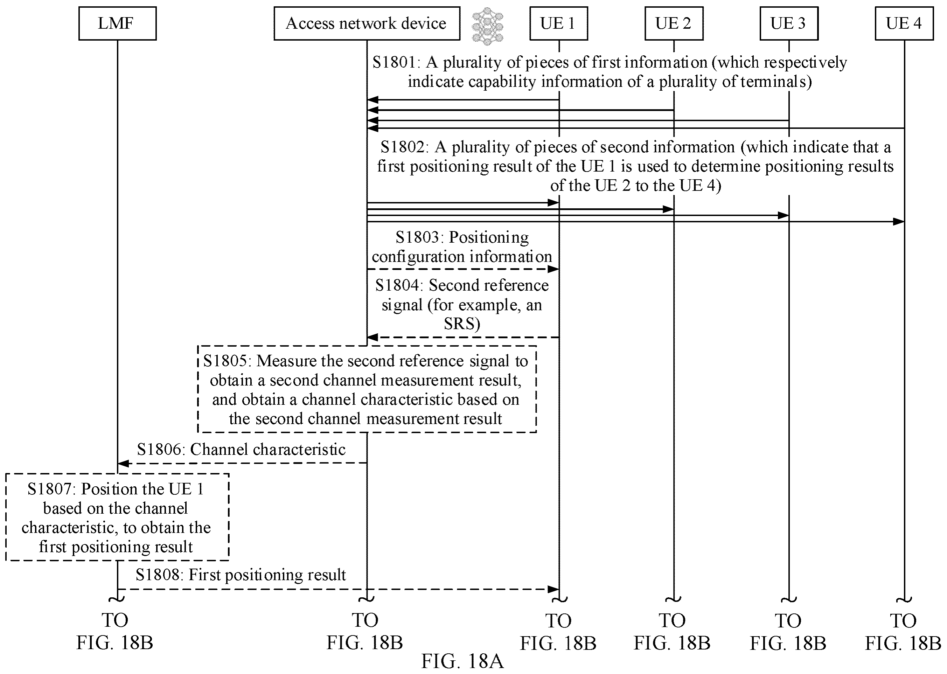

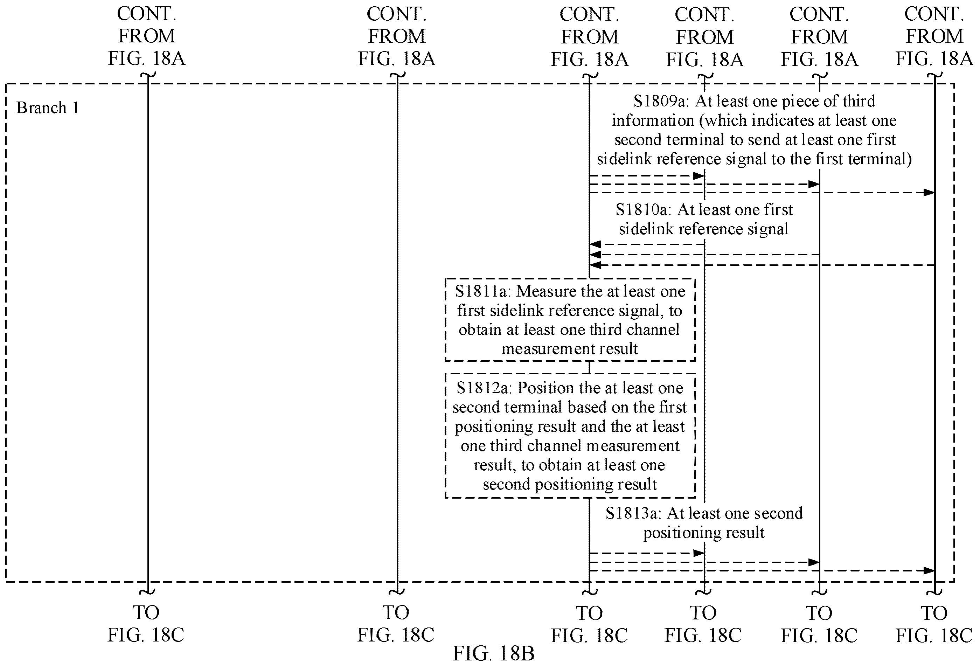

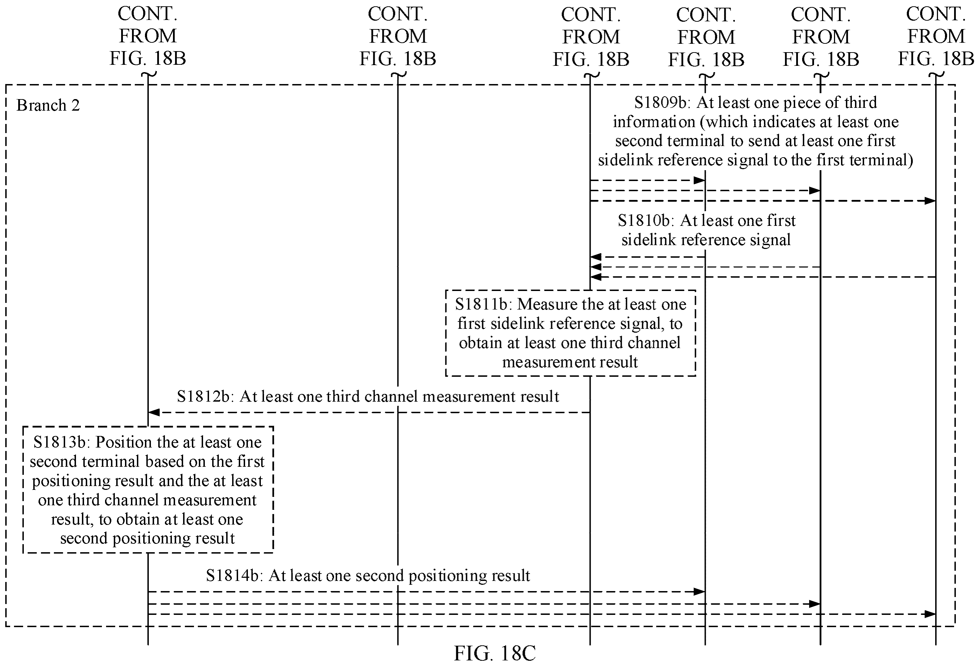

FIG. 18A, FIG. 18B, and FIG. 18C are a schematic flowchart of still another positioning method according to an embodiment of this application. The method is based on Scenario 2. An AI model is set on an access network device side for uplink positioning. For example, the method may include the following steps.

S1801: A plurality of terminals (a UE 1 to a UE 4 in the figure) send a plurality of pieces of first information to an access network device.

Correspondingly, the access network device respectively receives the plurality of pieces of first information from the plurality of terminals.

In this embodiment, the plurality of terminals are close to each other. For example, a distance between terminals in the plurality of terminals is within a specified threshold range.

The plurality of pieces of first information respectively indicate capability information of the plurality of terminals. The capability information may include at least one of the following information: computing capability information, storage capability information, model training capability information, model update capability information, and capability information of supporting a model with a specific function. The model training capability information may indicate a specific model training capability, and the model update capability information may indicate a specific model update capability. For example, one bit may indicate capability information of supporting a model of a specific function. For example, one bit indicates capability information of supporting a model with a positioning function. When a value of the bit is "1", it indicates that the positioning function is supported. When a value of the bit is "0", it indicates that the positioning function is not supported.

In this embodiment, because the AI model is set on the access network device side, the UE 1 to the UE 4 respectively send the first information to the access network device. For example, the UE 1 to the UE 4 respectively send a positioning request to an LMF by using the access network device, and the positioning request includes the first information. After receiving the positioning request, the access network device may obtain the first information in the positioning request, and forward the positioning request to the LMF.

S1802: The access network device respectively sends a plurality of pieces of second information to the plurality of terminals.

After receiving the plurality of pieces of first information, the access network device obtains the capability information of the plurality of terminals. The access network device determines a primary positioning terminal based on the capability information of the plurality of terminals. A positioning result of the primary positioning terminal is used to determine a positioning result of another terminal in the plurality of terminals.

In an example, the access network device compares computing capabilities of the plurality of terminals based on the computing capability information of the plurality of terminals, and determines that a computing capability of the UE 1 is greater than computing capabilities of the other terminals. In this case, the UE 1 is determined as the primary positioning terminal.

In another example, the access network device compares storage capabilities of the plurality of terminals based on the storage capability information of the plurality of terminals, and determines that a storage capability of the UE 1 is greater than storage capabilities of the other terminals. In this case, the UE 1 is determined as the primary positioning terminal.

In still another example, the access network device compares model training capabilities of the plurality of terminals based on the model training capability information of the plurality of terminals, and determines that a model training capability of the UE 1 is greater than model training capabilities of the other terminals. In this case, the UE 1 is determined as the primary positioning terminal.

In yet another example, the access network device compares model update capabilities of the plurality of terminals based on the model update capability information of the plurality of terminals, and determines that a model update capability of the UE 1 is greater than model update capabilities of the other terminals. In this case, the UE 1 is determined as the primary positioning terminal.

In still yet another example, the access network device requires the primary positioning terminal to support a positioning function. The access network device determines, based on the capability information of supporting a model with a specific function, that the UE 1 supports the positioning function. In this case, the UE 1 is determined as the primary positioning terminal.

After determining the primary positioning terminal, that is, determining that the positioning result of the primary positioning terminal is used to determine the positioning result of the another terminal in the plurality of terminals, the access network device respectively sends the plurality of pieces of second information to the plurality of terminals. In this embodiment, the plurality of terminals include a first terminal and at least one second terminal. The second information indicates that a first positioning result of the first terminal (for example, the UE 1) is used to determine a positioning result of at least one second terminal (for example, a UE 2 to the UE 4).

It can be learned that the second information is based on the capability information of the plurality of terminals. In other words, the second information is related to the capability information of the plurality of terminals.

For example, the second information may further include an identifier of the first terminal and/or an identifier of the at least one second terminal.

For example, the access network device may broadcast the second information, or may respectively send the second information to the plurality of terminals.

Further, the method may include the following steps (represented by dashed lines in the figure).

S1803: The access network device sends positioning configuration information to the UE 1.

The positioning configuration information is used to configure the UE 1 to send a second reference signal to an access network device. The positioning configuration information further indicates a sending periodicity, a time-frequency resource, and the like of the second reference signal. For example, the second reference signal may be an SRS.

S1804: After receiving the positioning configuration information, the UE 1 sends the second reference signal to the access network device based on the positioning configuration information.

The UE 1 sends the second reference signal to the access network device on a configured time-frequency resource based on the configured sending periodicity.

S1805: After receiving the second reference signal, the access network device measures the second reference signal to obtain a second channel measurement result, and obtain a channel characteristic based on the second channel measurement result.

After receiving the second reference signal, the access network device measures the second reference signal, so that the access network device can measure a channel between the access network device and the UE 1, to obtain the second channel measurement result. That is, the second channel measurement result is obtained by the access network device by measuring the second reference signal. For example, the second channel measurement result may be a channel impulse response.

In addition, because the access network device is provided with the AI model, the access network device may further input the second channel measurement result to the AI model, and obtain the channel characteristic through output. For example, the channel characteristic includes at least one of the following: a line-of-sight path identification result, a non-line-of-sight path identification result, a first-path time-of-arrival estimation result, and an angle-of-arrival estimation result.

S1806: The access network device sends the channel characteristic to the LMF.

A dimension of the channel characteristic is determined by an output dimension of the AI model on the access network device side. For example, the access network device may extract a channel characteristic whose dimension is [128] from a channel measurement result whose dimension is [16, 4096], and send the channel characteristic to the LMF. In this way, signaling overheads may be reduced.

S1807: After receiving the channel characteristic, the LMF positions the UE 1 based on the channel characteristic, to obtain the first positioning result.

S1808: The LMF sends the first positioning result to the UE 1.

The following procedure describes how to obtain the positioning result of the another terminal based on the first positioning result, and may include the following several branches:

Branch 1:

S1809a: The UE 1 sends at least one piece of third information to the at least one second terminal (including the UE 2 to the UE 4).

The at least one piece of third information indicates the at least one second terminal to send at least one first sidelink reference signal to the first terminal.

S1810a: After receiving the at least one piece of third information, the at least one second terminal (including the UE 2 to the UE 4) respectively sends the at least one first sidelink reference signal to the UE 1.

S1811a: The UE 1 measures the at least one first sidelink reference signal, to obtain at least one third channel measurement result.

S1812a: The UE 1 positions the at least one second terminal based on the first positioning result and the at least one third channel measurement result, to obtain at least one second positioning result.

S1813a: The UE 1 respectively sends the at least one second positioning result to the at least one second terminal.

For specific implementation of Branch 1, refer to corresponding descriptions of Branch 1 in the embodiment shown in FIG. 16A, FIG. 16B, and FIG. 16C. Details are not described herein again.

Branch 2:

S1809b: The UE 1 sends at least one piece of third information to the at least one second terminal (including the UE 2 to the UE 4).

The at least one piece of third information indicates the at least one second terminal to send at least one first sidelink reference signal to the first terminal.

S1810b: After receiving the at least one piece of third information, the at least one second terminal (including the UE 2 to the UE 4) respectively sends the at least one first sidelink reference signal to the UE 1.

S1811b: The UE 1 measures the at least one first sidelink reference signal, to obtain at least one third channel measurement result.

S1812b: The UE 1 sends the at least one third channel measurement result to the LMF.

S1813b: After receiving the at least one third channel measurement result, the LMF positions the at least one second terminal based on the first positioning result and the at least one third channel measurement result, to obtain at least one second positioning result.

S1814b: The LMF respectively sends the at least one second positioning result to the at least one second terminal.

For specific implementation of Branch 2, refer to corresponding descriptions of Branch 2 in the embodiment shown in FIG. 16A, FIG. 16B, and FIG. 16C. Details are not described herein again.

Branch 3: Refer to the descriptions in the embodiment shown in FIG. 16A, FIG. 16B, and FIG. 16C.

Branch 4: Refer to the descriptions in the embodiment shown in FIG. 16A, FIG. 16B, and FIG. 16C.

It can be learned from the foregoing branches that the primary positioning terminal UE 1 exchanges sidelink information with another terminal, to implement positioning of the another terminal.

Positioning of the UE 1 to the UE 4 is implemented through the foregoing procedure. When the closely located UE 1 to the UE 4 need to be positioned at the same time, a combined positioning method of network downlink direct positioning and coordinated positioning is used, which can reduce signaling and calculation overheads while ensuring reliable positioning performance. In addition, for terminals with different hardware capabilities, a network side determines the primary positioning terminal, which can also ensure reliable positioning performance.

According to the positioning method provided in this embodiment of this application, a network side does not need to perform positioning measurement on each terminal. Positioning measurement is performed on the first terminal, and a positioning result of the first terminal may be used to determine a positioning result of another terminal, thereby reducing signaling overheads.

It may be understood that, to implement functions in the foregoing embodiments, the network elements includes corresponding hardware structures and/or corresponding software modules for performing the functions. A person skilled in the art should be easily aware that this application can be implemented by hardware or a combination of hardware and computer software in combination with the units and the method steps in the examples described in embodiments disclosed in this application. Whether a function is performed by hardware or hardware driven by computer software depends on particular application scenarios and design constraint conditions of the technical solutions.

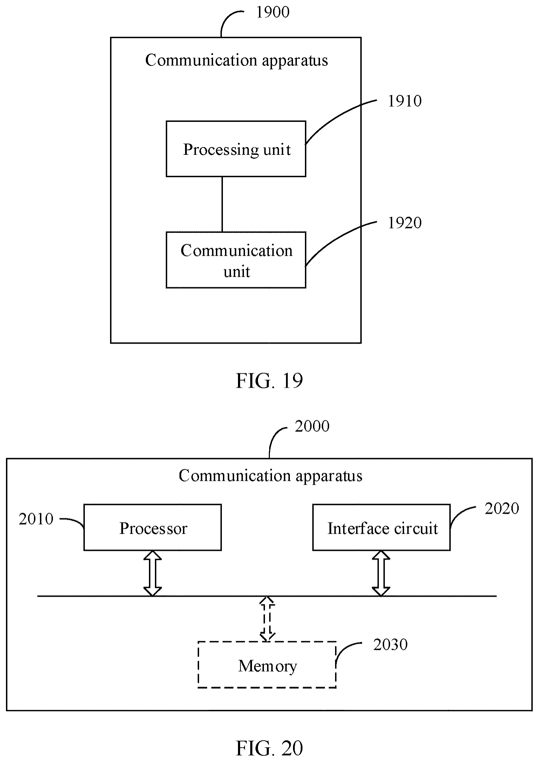

FIG. 19 and FIG. 20 are diagrams of possible structures of communication apparatuses according to embodiments of this application. These communication apparatuses may be configured to implement functions of the network elements in the foregoing method embodiments, and therefore may also implement beneficial effects of the foregoing method embodiments. In this embodiment of this application, the communication apparatus may be one of the communication devices 120a to 120j shown in FIG. 2, or may be the network device 110a or 110b shown in FIG. 2, or may be a core network device (not shown in FIG. 2), or may be a module (such as a chip or a circuit) used in a communication device, a network device, or a core network device.

As shown in FIG. 19, the communication apparatus 1900 includes a processing unit 1910 and a communication unit 1920. The communication apparatus 1900 is configured to implement functions of the first terminal, the second terminal, the access network device, or the LMF in the method embodiments shown in FIG. 16A to FIG. 18C.

When the communication apparatus 1900 is configured to implement functions of the first terminal in the method embodiment shown in FIG. 16A, FIG. 16B, and FIG. 16C, the communication unit 1920 is configured to perform operations performed by the first terminal in steps S1601, S1602, S1604, S1606, S1608, S1609a, S1610a, S1613a, and the like in the embodiment shown in FIG. 16A, FIG. 16B, and FIG. 16C, and the processing unit 1910 is configured to perform steps S1605, S1611a, S 1612a, and the like in the embodiment shown in FIG. 16A, FIG. 16B, and FIG. 16C.

When the communication apparatus 1900 is configured to implement functions of the second terminal in the method embodiment shown in FIG. 16A, FIG. 16B, and FIG. 16C, the communication unit 1920 is configured to perform operations performed by the second terminal in steps S1601, S1602, S1609a, S1610a, S1613a, and the like in the embodiment shown in FIG. 16A, FIG. 16B, and FIG. 16C.

When the communication apparatus 1900 is configured to implement functions of the access network device in the method embodiment shown in FIG. 16A, FIG. 16B, and FIG. 16C, the communication unit 1920 is configured to perform operations performed by the access network device in steps S1603 and S1604 in the embodiment shown in FIG. 16A, FIG. 16B, and FIG. 16C.

When the communication apparatus 1900 is configured to implement functions of the LMF in the method embodiment shown in FIG. 16A, FIG. 16B, and FIG. 16C, the communication unit 1920 is configured to perform operations performed by the LMF in steps S1601 to S1603, S1606, S1608, S1612b, S1614b, and the like in the embodiment shown in FIG. 16A, FIG. 16B, and FIG. 16C, and the processing unit 1910 is configured to perform steps S1607 and S1613b in the embodiment shown in FIG. 16A, FIG. 16B, and FIG. 16C.

When the communication apparatus 1900 is configured to implement functions of the first terminal in the method embodiment shown in FIG. 17A, FIG. 17B, and FIG. 17C, the communication unit 1920 is configured to perform operations performed by the first terminal in steps S1701, S1702, S1703, S1704, S1708, S1709a, S1710a, S1713a, and the like in the embodiment shown in FIG. 17A, FIG. 17B, and FIG. 17C, and the processing unit 1910 is configured to perform steps S1705, S1711a, S1712a, and the like in the embodiment shown in FIG. 17A, FIG. 17B, and FIG. 17C.

When the communication apparatus 1900 is configured to implement functions of the second terminal in the method embodiment shown in FIG. 17A, FIG. 17B, and FIG. 17C, the communication unit 1920 is configured to perform operations performed by the second terminal in steps S1701, S1702, S1709a, S1710a, S1713a, and the like in the embodiment shown in FIG. 17A, FIG. 17B, and FIG. 17C.

When the communication apparatus 1900 is configured to implement functions of the access network device in the method embodiment shown in FIG. 17A, FIG. 17B, and FIG. 17C, the communication unit 1920 is configured to perform operations performed by the access network device in steps S1704 and S1706 in the embodiment shown in FIG. 17A, FIG. 17B, and FIG. 17C.

When the communication apparatus 1900 is configured to implement functions of the LMF in the method embodiment shown in FIG. 17A, FIG. 17B, and FIG. 17C, the communication unit 1920 is configured to perform operations performed by the LMF in steps S1701 to S1703, S1706, S1708, S1712b, S1714b, and the like in the embodiment shown in FIG. 17A, FIG. 17B, and FIG. 17C, and the processing unit 1910 is configured to perform steps S1707 and S1713b in the embodiment shown in FIG. 17A, FIG. 17B, and FIG. 17C.

When the communication apparatus 1900 is configured to implement functions of the first terminal in the method embodiment shown in FIG. 18A, FIG. 18B, and FIG. 18C, the communication unit 1920 is configured to perform operations performed by the first terminal in steps S1801 to S1804, S1808, S1809a, S1810a, S1813a, and the like in the embodiment shown in FIG. 18A, FIG. 18B, and FIG. 18C, and the processing unit 1910 is configured to perform steps S1811a, S1812a, and the like in the embodiment shown in FIG. 18A, FIG. 18B, and FIG. 18C.

When the communication apparatus 1900 is configured to implement functions of the second terminal in the method embodiment shown in FIG. 18A, FIG. 18B, and FIG. 18C, the communication unit 1920 is configured to perform operations performed by the second terminal in steps S1801, S1802, S1809a, S1810a, S1813a, and the like in the embodiment shown in FIG. 18A, FIG. 18B, and FIG. 18C.

When the communication apparatus 1900 is configured to implement functions of the access network device in the method embodiment shown in FIG. 18A, FIG. 18B, and FIG. 18C, the communication unit 1920 is configured to perform operations performed by the access network device in steps S1801 to S1804 and S1806 in the embodiment shown in FIG. 18A, FIG. 18B, and FIG. 18C, and the processing unit 1910 is configured to perform step S1805 in the embodiment shown in FIG. 18A, FIG. 18B, and FIG. 18C.

When the communication apparatus 1900 is configured to implement functions of the LMF in the method embodiment shown in FIG. 18A, FIG. 18B, and FIG. 18C, the communication unit 1920 is configured to perform operations performed by the LMF in steps S1806, S1808, S1812b, S1814b, and the like in the embodiment shown in FIG. 18A, FIG. 18B, and FIG. 18C, and the processing unit 1910 is configured to perform steps S1807 and S1813b in the embodiment shown in FIG. 18A, FIG. 18B, and FIG. 18C.

For more detailed descriptions of the processing unit 1910 and the communication unit 1920, directly refer to the related descriptions in the method embodiments shown in FIG. 16A to FIG. 18C. Details are not described herein again.

As shown in FIG. 20, a communication apparatus 2000 includes a processor 2010 and an interface circuit 2020. The processor 2010 and the interface circuit 2020 are coupled to each other. It can be understood that the interface circuit 2020 may be a transceiver or an input/output interface. Optionally, the communication apparatus 2000 may further include a memory 2030, configured to store instructions executed by the processor 2010, or store input data required by the processor 2010 to run instructions, or store data generated after the processor 2010 runs instructions.

When the communication apparatus 2000 is configured to implement the method shown in FIG. 16A, FIG. 16B, and FIG. 16C, or FIG. 18A, FIG. 18B, and FIG. 18C, the processor 2010 is configured to implement a function of the processing unit 1910, and the interface circuit 2020 is configured to implement a function of the communication unit 1920.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal. Certainly, the processor and the storage medium may exist in the network device or the terminal as discrete components.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer programs or instructions. When the computer program or the instructions are loaded and executed on a computer, the procedures or functions in embodiments of this application are completely or partially performed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application provides a communication chip, including a processor and a communication interface. The processor is configured to read instructions or a computer program, to perform the methods in embodiments of this application.

An embodiment of this application further provides a computer-readable storage medium. The computer-readable storage medium stores a computer program used to implement the methods in embodiments of this application. When the computer program is run on a computer, the computer is caused to implement the methods in the foregoing method embodiments.

An embodiment of this application further provides a computer program product. When the computer program product is run on a computer, the computer is caused to perform the methods in embodiments of this application.

An embodiment of this application further provides a communication system, including a first communication apparatus, a second communication apparatus, a third communication apparatus, and a fourth communication apparatus. The first communication apparatus is configured to perform functions of the first terminal in embodiments shown in FIG. 16A to FIG. 18C. The second communication apparatus is configured to perform functions of the second terminal in embodiments shown in FIG. 16A to FIG. 18C. The third communication apparatus is configured to perform functions of the access network device in embodiments shown in FIG. 16A to FIG. 18C. The fourth communication apparatus is configured to perform functions of the LMF in embodiments shown in FIG. 16A to FIG. 18C.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "At least one of the following: ..." or a similar expression represents any listed item or a combination of any quantity of these items. For example, "at least one of the following: A, B, and C", or "at least one of the following: A, B, or C" both may indicate: Only A exists, only B exists, only C exists, both A and B exist, both B and C exist, both A and C exist, and A, B, and C all exist, where A, B, and C may be singular or plural. The term "and/or" describes an association relationship between associated objects, and indicates that three relationships may exist. For example, A and/or B may represent the following cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A positioning method, wherein the method is performed by a first terminal, or a chip or a circuit used in the first terminal, and the method comprises:

   sending first information, wherein the first information indicates capability information of the first terminal; and
   receiving second information, wherein the second information indicates that a first positioning result of the first terminal is used to determine a positioning result of at least one second terminal.

2. The method according to claim 1, wherein the capability information comprises at least one of the following information: computing capability information, storage capability information, model training capability information, model update capability information, and capability information of supporting a model with a specific function.

3. The method according to claim 1 or 2, wherein the method further comprises:

sending at least one piece of third information to the at least one second terminal, wherein the at least one piece of third information indicates the at least one second terminal to send at least one first sidelink reference signal to the first terminal;
receiving the at least one first sidelink reference signal from the at least one second terminal; and
measuring the at least one first sidelink reference signal to obtain at least one third channel measurement result.

4. The method according to claim 3, wherein the method further comprises:

positioning the at least one second terminal based on the first positioning result and the at least one third channel measurement result, to obtain at least one second positioning result; and
respectively sending the at least one second positioning result to the at least one second terminal.

5. The method according to claim 3, wherein the method further comprises:
sending the at least one third channel measurement result to a location management function LMF network element, wherein the third channel measurement result is used to position the at least one second terminal based on the first positioning result.

6. A positioning method, wherein the method is performed by a second terminal, or a chip or a circuit used in the second terminal, and the method comprises:

sending fourth information, wherein the fourth information indicates capability information of the second terminal; and
receiving second information, wherein the second information indicates that a positioning result of the second terminal is to be determined based on a positioning result of another terminal, or that a first positioning result of a first terminal is used to determine a positioning result of at least one second terminal.

7. The method according to claim 6, wherein the capability information comprises at least one of the following information: computing capability information, storage capability information, model training capability information, model update capability information, and capability information of supporting a model with a specific function.

8. The method according to claim 6 or 7, wherein the method further comprises:

receiving third information from the first terminal, wherein the third information indicates the second terminal to send a first sidelink reference signal to the first terminal;
sending the first sidelink reference signal to the first terminal based on the third information; and
receiving a second positioning result corresponding to the second terminal from the first terminal or a location management function LMF network element.

9. The method according to claim 6 or 7, wherein the method further comprises:

receiving a second sidelink reference signal from the first terminal;
measuring the second sidelink reference signal to obtain a fourth channel measurement result;
sending the fourth channel measurement result to the LMF, wherein the fourth channel measurement result is used to position the second terminal based on the first positioning result; and
receiving a second positioning result from the LMF.

10. A positioning method, wherein the method is performed by a location management function LMF network element, or a chip or a circuit used in the LMF, and the method comprises:

respectively receiving a plurality of pieces of first information from a plurality of terminals, wherein the plurality of pieces of first information respectively indicate capability information of the plurality of terminals; and
respectively sending a plurality of pieces of second information to the plurality of terminals, wherein the second information indicates that a first positioning result of a first terminal is used to determine a positioning result of at least one second terminal, and the plurality of terminals comprise the first terminal and the at least one second terminal.

11. The method according to claim 10, wherein the method further comprises:

receiving a first channel measurement result and/or a first channel characteristic corresponding to the first terminal; and

sending the first positioning result of the first terminal, wherein the first positioning result is based on the first channel measurement result and/or the first channel characteristic.

12. The method according to claim 11, wherein the channel characteristic comprises at least one of the following: a line-of-sight path identification result, a non-line-of-sight path identification result, a first-path time-of-arrival estimation result, and an angle-of-arrival estimation result.

13. A positioning method, wherein the method is performed by an access network device, or a chip or a circuit used in the access network device, and the method comprises:

respectively receiving a plurality of pieces of first information from a plurality of terminals, wherein the plurality of pieces of first information respectively indicate capability information of the plurality of terminals; and

respectively sending a plurality of pieces of second information to the plurality of terminals, wherein the second information indicates that a first positioning result of a first terminal is used to determine a positioning result of at least one second terminal, and the plurality of terminals comprise the first terminal and the at least one second terminal.

14. A communication apparatus, configured to implement the method according to any one of claims 1 to 13.

15. A computer-readable storage medium, wherein the computer-readable storage medium stores instructions, and when the instructions are run on a computer, the computer is caused to perform the method according to any one of claims 1 to 13.

LMF

Base station

UEs

Work station 1

UEs

Work station 2

FIG. 1

_100_

120j

120i

110b

120d

120e

110a

120a

120f

120g

120h

120b

120c

FIG. 2

$$y = f\left(\sum_{i=0}^{n} w_i x_i + b\right)$$

Neuron

$w_0 x_0$

$w_1 x_1$

$w_n x_n$

$y$

FIG. 3A

Neuron

Layer

Weight value

Input layer

Hidden layer

Output layer

FIG. 3B

Data source

Training data

Model training

Performance feedback

Model deployment/ update

Model feedback

Inference data

Model inference

Output

Actor entity

FIG. 3C

AI network
element 140

Access network
device 110

Terminal
device 120

Terminal
device 130

FIG. 4

FIG. 5A

EP 4 672 788 A1

FIG. 5B

Core network
device

AI entity

OAM

NG

NG

Access network
device

AI entity

Xn

Access network
device

AI entity

AI entity

FIG. 5C

Core network
device

AI entity

OAM

NG

NG

CU

AI entity

Xn

CU

AI entity

F1

F1

DU

AI entity

DU

AI entity

AI entity

FIG. 5D

FIG. 6

FIG. 7

FIG. 8

FIG. 9A

FIG. 9B

FIG. 10A

FIG. 10B

FIG. 11

FIG. 12A

Channel
response 1

→

BS 1

Channel
characteristic 1

Channel
response 2

→

BS 2

Channel
characteristic 2

LMF

UE
location

Channel
response 3

→

BS 3

Channel
characteristic 3

## FIG. 12B

LMF

gNB

PRU/UE

PRS →

Obtain a PRS measurement result
(which may further include label
information required for training)

PRS measurement result (which may further
include a corresponding label)

AI/ML model training/
update

## FIG. 13A

FIG. 13B

FIG. 14A

| LMF | gNB | UE |
|---|---|---|

SRS

Obtain an SRS
measurement result

Perform AI/ML model
inference

Line-of-sight path identification
result, non-line-of-sight path
identification result, first-path time-
of-arrival estimation result, and/or
angle-of-arrival estimation result

Perform final
positioning

FIG. 14B

LMF    gNB    PRU/UE

SRS

Obtain an SRS
measurement result

SRS measurement result

Corresponding label

AI/ML model training/
update

FIG. 15A

LMF    gNB    UE

SRS

SRS measurement result

AI/ML model inference

FIG. 15B

| LMF | | Access network device | UE 1 | UE 2 | UE 3 | UE 4 |
|---|---|---|---|---|---|---|

S1601: A plurality of pieces of first information (which respectively indicate capability information of a plurality of terminals)

S1602: A plurality of pieces of second information (which indicate that a first positioning result of the UE 1 is used to determine positioning results of the UE 2 to the UE 4)

S1603: Positioning configuration information

S1604: First reference signal (for example, a PRS)

S1605: Measure the first reference signal, to obtain a first channel measurement result

S1606: First channel measurement result

S1607: Position the UE 1 based on the first channel measurement result, to obtain the first positioning result

S1608: First positioning result

| TO FIG. 16B | TO FIG. 16B | TO FIG. 16B | TO FIG. 16B | TO FIG. 16B | TO FIG. 16B |
|---|---|---|---|---|---|

FIG. 16A

CONT. FROM FIG. 16A    CONT. FROM FIG. 16A    CONT. FROM FIG. 16A    CONT. FROM FIG. 16A    CONT. FROM FIG. 16A    CONT. FROM FIG. 16A

TO FIG. 16C    TO FIG. 16C    TO FIG. 16C    TO FIG. 16C    TO FIG. 16C    TO FIG. 16C

S1609a: At least one piece of third information (which indicates at least one second terminal to send at least one first sidelink reference signal to the first terminal)

S1610a: At least one first sidelink reference signal

S1611a: Measure the at least one first sidelink reference signal, to obtain at least one third channel measurement result

S1612a: Position the at least one second terminal based on the first positioning result and the at least one third channel measurement result, to obtain at least one second positioning result

S1613a: At least one second positioning result

Branch 1

FIG. 16B

Branch 2

S1609b: At least one piece of third information (which indicates at least one second terminal to send at least one first sidelink reference signal to the first terminal)

S1610b: At least one first sidelink reference signal

S1611b: Measure the at least one first sidelink reference signal, to obtain at least one third channel measurement result

S1612b: At least one third channel measurement result

S1613b: Position the at least one second terminal based on the first positioning result and the at least one third channel measurement result, to obtain at least one second positioning result

S1614b: At least one second positioning result

FIG. 16C

EP 4 672 788 A1

FIG. 17A

EP 4 672 788 A1

CONT. FROM FIG. 17A    CONT. FROM FIG. 17A    CONT. FROM FIG. 17A    CONT. FROM FIG. 17A    CONT. FROM FIG. 17A    CONT. FROM FIG. 17A

Branch 1

S1709a: At least one piece of third information (which indicates at least one second terminal to send at least one first sidelink reference signal to the first terminal)

S1710a: At least one first sidelink reference signal

S1711a: Measure the at least one first sidelink reference signal, to obtain at least one third channel measurement result

S1712a: Position the at least one second terminal based on the first positioning result and the at least one third channel measurement result, to obtain at least one second positioning result

S1713a: At least one second positioning result

TO FIG. 17C    TO FIG. 17C    TO FIG. 17C    TO FIG. 17C    TO FIG. 17C    TO FIG. 17C

FIG. 17B

EP 4 672 788 A1

Branch 2

S1709b: At least one piece of third information (which indicates at least one second terminal to send at least one first sidelink reference signal to the first terminal)

S1710b: At least one first sidelink reference signal

S1711b: Measure the at least one first sidelink reference signal, to obtain at least one third channel measurement result

S1712b: At least one third channel measurement result

S1713b: Position the at least one second terminal based on the first positioning result and the at least one third channel measurement result, to obtain at least one second positioning result

S1714b: At least one second positioning result

FIG. 17C

EP 4 672 788 A1

EP 4 672 788 A1

| LMF | | Access network device | | UE 1 | UE 2 | UE 3 | UE 4 |

S1801: A plurality of pieces of first information (which respectively indicate capability information of a plurality of terminals)

S1802: A plurality of pieces of second information (which indicate that a first positioning result of the UE 1 is used to determine positioning results of the UE 2 to the UE 4)

S1803: Positioning configuration information

S1804: Second reference signal (for example, an SRS)

S1805: Measure the second reference signal to obtain a second channel measurement result, and obtain a channel characteristic based on the second channel measurement result

S1806: Channel characteristic

S1807: Position the UE 1 based on the channel characteristic, to obtain the first positioning result

S1808: First positioning result

TO FIG. 18B    TO FIG. 18B    TO FIG. 18B    TO FIG. 18B    TO FIG. 18B    TO FIG. 18B

FIG. 18A

| CONT. FROM FIG. 18A | CONT. FROM FIG. 18A | CONT. FROM FIG. 18A | CONT. FROM FIG. 18A | CONT. FROM FIG. 18A | CONT. FROM FIG. 18A |
|---|---|---|---|---|---|

Branch 1

S1809a: At least one piece of third information (which indicates at least one second terminal to send at least one first sidelink reference signal to the first terminal)

S1810a: At least one first sidelink reference signal

S1811a: Measure the at least one first sidelink reference signal, to obtain at least one third channel measurement result

S1812a: Position the at least one second terminal based on the first positioning result and the at least one third channel measurement result, to obtain at least one second positioning result

S1813a: At least one second positioning result

| TO FIG. 18C | TO FIG. 18C | TO FIG. 18C | TO FIG. 18C | TO FIG. 18C | TO FIG. 18C |
|---|---|---|---|---|---|

FIG. 18B

Branch 2

S1809b: At least one piece of third information (which indicates at least one second terminal to send at least one first sidelink reference signal to the first terminal)

S1810b: At least one first sidelink reference signal

S1811b: Measure the at least one first sidelink reference signal, to obtain at least one third channel measurement result

S1812b: At least one third channel measurement result

S1813b: Position the at least one second terminal based on the first positioning result and the at least one third channel measurement result, to obtain at least one second positioning result

S1814b: At least one second positioning result

FIG. 18C

EP 4 672 788 A1

1900

Communication apparatus

1910

Processing unit

1920

Communication
unit

FIG. 19

2000

Communication apparatus

2010

Processor

2020

Interface circuit

2030

Memory

FIG. 20

## INTERNATIONAL SEARCH REPORT

| | International application No. |
|---|---|
| | **PCT/CN2024/081855** |

| A. | CLASSIFICATION OF SUBJECT MATTER |
|---|---|

H04W4/029(2018.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXTC, VEN, IEEE: 参考信号, 侧行, 定位, 副链, 位置, 协同, 联合, 能力, 支持, 测量, 锚, 定位管理功能, location, position, anchor, basestation, gNB, LMF, sidelink, choos+, select+, cooperative, support

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2019239181 A1 (HUAWEI TECHNOLOGIES CO., LTD.) 01 August 2019 (2019-08-01) description, column 5, line 59-column 12, line 48 | 1-15 |
| X | CEWIT. "Views on study of sidelink based positioning in Rel.18" *RAN REL-18 workshop RWS-210491*, 08 June 2021 (2021-06-08), pages 3-10 | 1-15 |
| A | CN 115696562 A (VIVO COMMUNICATION TECHNOLOGY CO., LTD.) 03 February 2023 (2023-02-03) entire document | 1-15 |
| A | CN 112584487 A (DATANG MOBILE COMMUNICATIONS EQUIPMENT CO., LTD.) 30 March 2021 (2021-03-30) entire document | 1-15 |
| A | INTEL. "Moderator's summary for discussion [RAN93e-R18Prep-10] Expanded and improved Positioning" *3GPP TSG RAN#93e RP-211660*, 04 September 2021 (2021-09-04), entire document | 1-15 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **31 May 2024** | **13 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/081855**

| Patent document cited in search report | | | Publication date (day/month/year) | Patent family member(s) | | | Publication date (day/month/year) |
|---|---|---|---|---|---|---|---|
| US | 2019239181 | A1 | 01 August 2019 | WO | 2018068817 | A1 | 19 April 2018 |
| | | | | EP | 3516911 | A1 | 31 July 2019 |
| | | | | CN | 110383862 | A | 25 October 2019 |
| CN | 115696562 | A | 03 February 2023 | WO | 2023005836 | A1 | 02 February 2023 |
| | | | | US | 2024163832 | A1 | 16 May 2024 |
| CN | 112584487 | A | 30 March 2021 | WO | 2021057175 | A1 | 01 April 2021 |
| | | | | KR | 20220071243 | A | 31 May 2022 |
| | | | | IN | 202227011907 | A | 15 July 2022 |
| | | | | EP | 4037345 | A1 | 03 August 2022 |
| | | | | US | 2022321293 | A1 | 06 October 2022 |

Form PCT/ISA/210 (patent family annex) (July 2022)

**REFERENCES CITED IN THE DESCRIPTION**

**Patent documents cited in the description**

- CN 202310302334